(19) Europäisches Patentamt
European Patent Office
Office européen des brevets

(11) **EP 4 160 492 A1**

(12) **EUROPEAN PATENT APPLICATION**
published in accordance with Art. 153(4) EPC

(43) Date of publication:
**05.04.2023 Bulletin 2023/14**

(51) International Patent Classification (IPC):
*G06N 20/00* (2019.01)

(21) Application number: **20937784.5**

(52) Cooperative Patent Classification (CPC):
**G06N 20/00**

(22) Date of filing: **26.05.2020**

(86) International application number:
**PCT/JP2020/020814**

(87) International publication number:
**WO 2021/240664 (02.12.2021 Gazette 2021/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventors:
• SUZUKI, Hirofumi
**Kawasaki-shi, Kanagawa 211-8588 (JP)**
• GOTO, Keisuke
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **MODEL TRAINING PROGRAM, MODEL TRAINING METHOD, AND INFORMATION PROCESSING DEVICE**

(57) An information processing device selects training data that a determination model is enabled to correctly determine from among a plurality of pieces of the training data included in a training data set used for training of the determination model. The information processing device presents a data item that has contributed to determination among data items included in the selected training data and a determination result to a user. The information processing device receives an evaluation of ease of interpretation for the presented data item. The information processing device trains the determination model using the training data set, based on a loss function that is adjusted based on the evaluation result.

FIG. 8

EP 4 160 492 A1

**Description**

FIELD

The present invention relates to a model training program, a model training method, and an information processing device.

BACKGROUND

With spread of the artificial intelligence (AI) technology, there is an increasing demand for accountable machine learning models, such as questioning whether determination of a black box model is trustworthy, seeking the basis of the determination that may be interpreted by humans, and the like. In view of the above, a white box model such as a rule list, a decision tree, a linear model, or the like is used in advance, but only simply using a white box model does not necessarily result in a model that may be interpreted by humans.

Accordingly, in recent years, an interactive approach that repeats model generation and feedback to humans has been used to generate a model convincing to humans and having high accuracy. For example, a task of "predicting a model output for a certain input" is displayed to a user, and interpretability is evaluated on the basis of a reaction time. Then, according to the evaluation, parameters for optimizing the model are changed to update the model. With such processing repeated, the generation of the model convincing to humans and having high accuracy has been carried out.

SUMMARY

TECHNICAL PROBLEM

However, the technique described above is for models that allow humans to predict the output by following branches, such as the decision tree, the rule list, and the like, and it is difficult to apply the technique to a linear model. For example, in a case where 100 data items appear in the model, it is burdensome and unrealistic for a user to read all the 100 data items and estimate a predicted value of the model.

Furthermore, since the interpretability of the linear model is determined by ease of interpretation of the data items presented as explanation of the output, it is not possible to evaluate the interpretability from a length of a response time to the task described above.

In one aspect, an object is to provide a model training program, a model training method, and an information processing device that can improve ease of interpretation of a model.

SOLUTION TO PROBLEM

In a first idea, a model training program causes a computer to execute processing for selecting training data that a determination model is enabled to correctly determine, from among the plurality of pieces of training data included in a training data set used to train the determination model. The model training program causes the computer to execute processing for presenting, to a user, a data item that has contributed to determination among data items included in the selected training data and a determination result and receiving an evaluation of ease of interpretation for the presented data item. The model training program causes the computer to execute processing for training the determination model using the training data set, based on a loss function adjusted based on an evaluation result.

ADVANTAGEOUS EFFECTS OF INVENTION

According to one embodiment, it is possible to improve ease of interpretation of a model.

BRIEF DESCRIPTION OF DRAWINGS

FIG. 1 is a diagram for explaining an information processing device according to a first embodiment.
FIG. 2 is a diagram for explaining a problem in existing techniques.
FIG. 3 is a functional block diagram illustrating a functional configuration of the information processing device according to the first embodiment.
FIG. 4 is a diagram for explaining an exemplary training data set.
FIG. 5 is a diagram for explaining a loss function.

FIG. 6 is a diagram for explaining recommendation of data items.
FIG. 7 is a diagram for explaining a first loop of a specific example.
FIG. 8 is a diagram for explaining an exemplary inquiry screen.
FIG. 9 is a diagram for explaining a second loop of the specific example.
FIG. 10 is a diagram for explaining the second loop of the specific example.
FIG. 11 is a diagram for explaining a third loop of the specific example.
FIG. 12 is a diagram for explaining the third loop of the specific example.
FIG. 13 is a diagram for explaining a fourth loop of the specific example.
FIG. 14 is a diagram for explaining the fourth loop of the specific example.
FIG. 15 is a diagram for explaining a fifth loop of the specific example.
FIG. 16 is a diagram for explaining the fifth loop of the specific example.
FIG. 17 is a flowchart illustrating a flow of processing.
FIG. 18 is a diagram for explaining an exemplary hardware configuration.

## DESCRIPTION OF EMBODIMENTS

Hereinafter, embodiments of a model training program, a model training method, and an information processing device according to the present invention will be described in detail with reference to the drawings. Note that the present invention is not limited by these embodiments. Furthermore, the embodiments may be appropriately combined with each other unless otherwise contradicted.

[First Embodiment]

[Description of Information Processing Device]

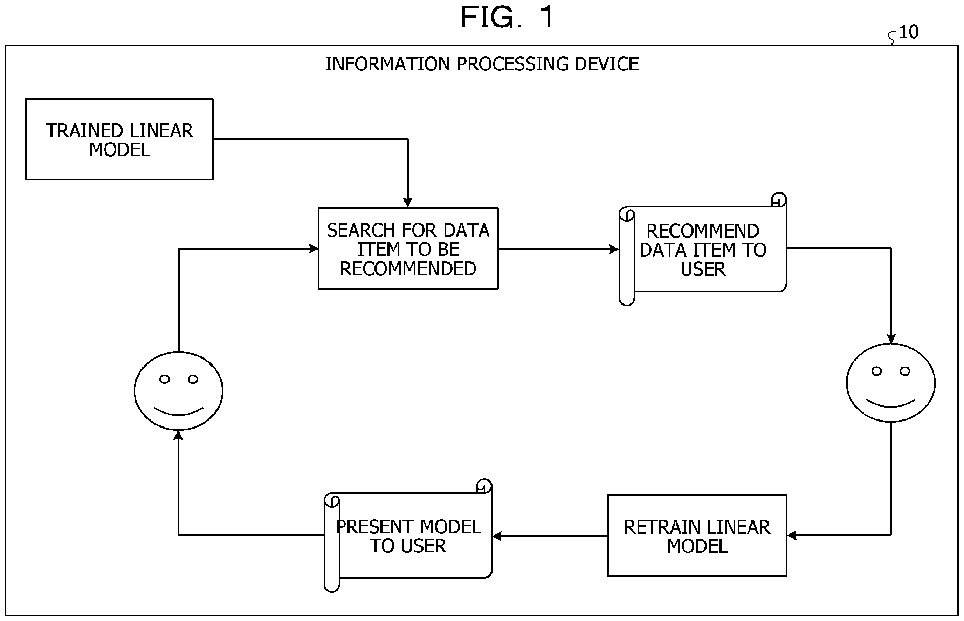

FIG. 1 is a diagram for explaining an information processing device 10 according to a first embodiment. The information processing device 10 illustrated in FIG. 1 is a computer device that generates a highly interpretable determination model. The information processing device 10 repeats evaluation feedback by humans and model generation through user (human) interaction, and generates a model convincing to humans and having high accuracy while minimizing time and effort taken by humans. The information processing device 10 according to the first embodiment will be described using a linear model, which is an example of a white box model, as an example of an accountable machine learning model.

Here, a determination model (learning model) based on a regression equation (refer to equation (2)) obtained by minimizing a loss function expressed by an equation (1) may be considered as an example of the linear model. Note that the loss function is an exemplary objective function including training data, a classification error (determination error), and a weight penalty, and the regression equation indicates an example assuming that there are d data items. The regression equation is a model that determines the example as a positive example when m (x) > 0 and as a negative example otherwise.

[Math. 1]

$$\text{Loss function } L(y, X, a) = \|y - aX\|_2^2 + \rho \sum_i^d a_i$$

| $y, X$: Training data | Classification error | Weight penalty |

... Equation (1)

[Math. 2]

$$\text{Regression equation } m(x) = a_1 x_1 + a_2 x_2 + \cdots + a_d x_d$$

... Equation (2)

Typically, in the trained determination model, a data item that matches input data and has a weight of not "0" is presented to a user as an explanation. For example, in a case of inputting an input x = (0, 1, 1, 0, 1) when the determination model is m (x) = $7x_1 - 2x_3 - 6x_5$, a predicted value m (x) by the determination model is "-8". At this time, since it is determined as a negative example due to $x_3$ and $x_5$, "$x_5$" may be presented to the user as particularly important. In this manner, as the training progresses with an interactive approach, the number of data items with a weight of "0" increases by adjusting the penalty in the loss function so that the explanation is simplified, but explanation simplicity and determination accuracy are in a trade-off relationship.

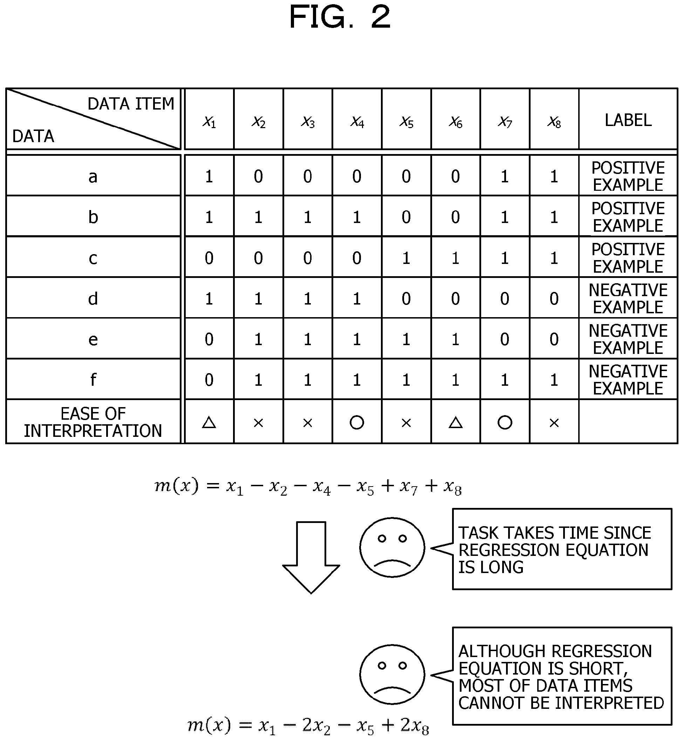

FIG. 2 is a diagram for explaining a problem in existing techniques. As illustrated in FIG. 2, while increasing the number of data items improves the determination accuracy, the regression equation becomes longer so that a time needed for the user to perform a task of "predicting a model output for a certain input" becomes longer. That is, it takes a longer time for the user to determine whether or not each data item is interpretable and to obtain evaluation by the user, whereby it takes time to generate the determination model. On the other hand, when the regression equation is shortened, the data items $x_2$, $x_5$, $x_8$ (ease of interpretation = x), or the like difficult for the user to interpret may be used in many cases, whereby a task processing time of the user is not necessarily shortened.

Therefore, the information processing device 10 according to the first embodiment prepares a penalty coefficient at the time of model generation for each data item, and updates the penalty coefficient according to a result of a task of "evaluating a presented data item". Then, the information processing device 10 optimizes a model using the updated penalty coefficient so as to update the loss function and train the model.

Specifically, the information processing device 10 selects training data that can be correctly determined by the determination model, among training data included in a training data set used for training of the determination model. Then, the information processing device 10 presents, to the user, a data item that contributes to the determination among data items included in the selected training data and the determination result and receives an evaluation regarding ease of interpretation for the presented data item. Thereafter, the information processing device 10 trains the determination model using the training data set based on the loss function that is adjusted based on the evaluation result.

That is, as illustrated in FIG. 1, the information processing device 10 searches for a data item to be recommend to the user, using the trained linear model (determination model) and recommends the searched data item to the user. Then, the information processing device 10 acquires a user evaluation for the recommended data item, trains the determination model (linear model) in consideration of the user evaluation, and presents the trained determination model to the user. Furthermore, the information processing device 10 obtains the user evaluation for the proposed determination model, and re-executes the search for a data item to be proposed to the user.

That is, the information processing device 10 simplifies a task by reducing the number of data items when recommending the data item to the user on the basis of a training history and repeats the user evaluation and training based on the evaluation so as to generate a model considering the ease of the interpretation of the data item. In this manner, the information processing device 10 is enabled to improve the ease of interpretation of the model. Note that "easy to interpret data items" used in the present embodiment is synonymous with "easy to appear in a model".

[Functional Configuration]

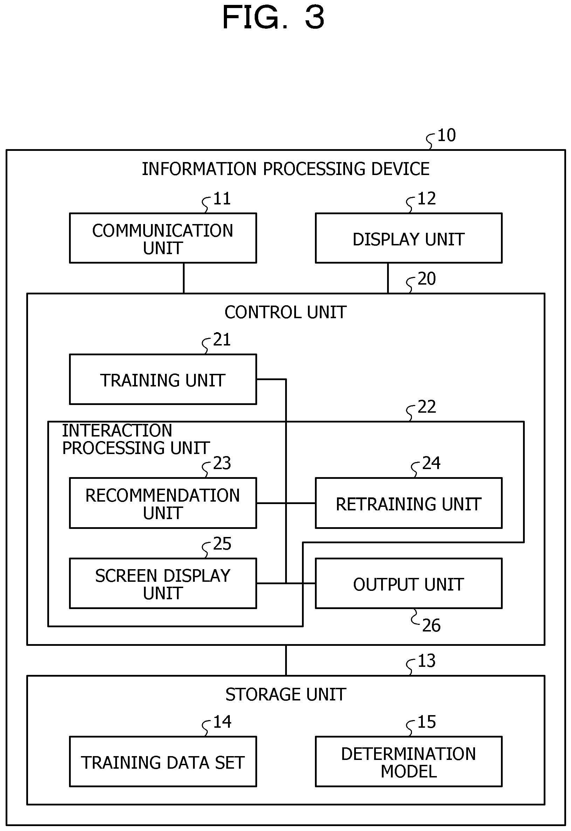

FIG. 3 is a functional block diagram illustrating a functional configuration of the information processing device 10 according to the first embodiment. As illustrated in FIG. 3, the information processing device 10 includes a communication unit 11, a display unit 12, a storage unit 13, and a control unit 20.

The communication unit 11 is a processing unit that controls communication with another device, and is implemented by, for example, a communication interface. For example, the communication unit 11 receives, from an administrator terminal or the like, the training data set and various instructions such as a processing start, and transmits the trained determination model to the administrator terminal.

The display unit 12 is a processing unit that outputs various types of information generated by the control unit 20, and is implemented by, for example, a display, a touch panel, or the like.

The storage unit 13 is an example of a storage device that stores various types of data, programs to be executed by the control unit 20, or the like, and is implemented by, for example, a memory or a hard disk. The storage unit 13 stores a training data set 14 and a determination model 15.

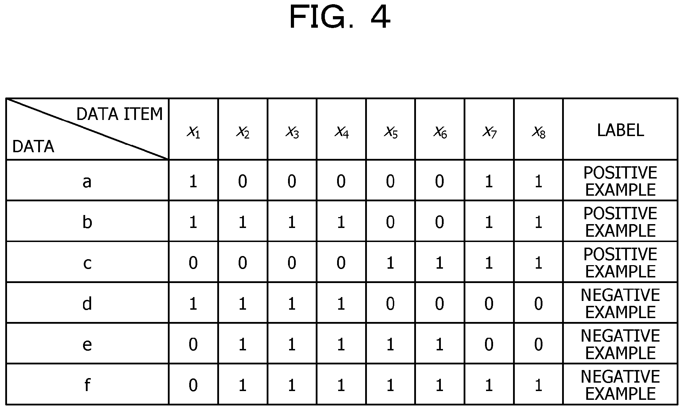

The training data set 14 is training data used to train the determination model 15. FIG. 4 is a diagram for explaining an example of the training data set 14. As illustrated in FIG. 4, the training data set 14 includes a plurality of pieces of training data in which a plurality of data items, which is an explanatory variable, is associated with correct answer information (label), which is an objective variable.

Specifically, as illustrated in FIG. 4, each piece of data a, b, c, d, e, and f, which is an example of the training data, includes a data item $x_i$ (i = 1 to 8) indicating characteristics and a label. For example, in the data a, "1, 0, 0, 0, 0, 0, 1, and 1" is set as the "data items $x_1$, $x_2$, $x_3$, $x_4$, $x_5$, $x_6$, $x_7$, and $x_8$", and a "positive example" is set as a label.

The determination model 15 is a trained model trained using the training data set 14. For example, the determination model 15 is a linear model m (x) expressed by an equation (3) or the like, and is determined (classified) as a "positive example" when the predicted value m (x) for an input is larger than zero, and as a "negative example" when the predicted value m(x) is equal to or less than zero. Note that the determination model 15 is generated by a training unit 21 to be described later.

[Math. 3]

$$m(x) = x_1 - 2x_2 - x_5 + 2x_8 \qquad \ldots \texttt{Equation (3)}$$

The control unit 20 is a processing unit that performs overall control of the information processing device 10 and, for example, is implemented by a processor or the like. The control unit 20 includes the training unit 21, an interaction processing unit 22, and an output unit 26. Note that the training unit 21, the interaction processing unit 22, and the output unit 26 may be implemented as an electronic circuit such as a processor or may be implemented as a process to be executed by a processor.

The training unit 21 is a processing unit that trains (learn) the determination model 15. Specifically, the training unit 21 trains the determination model 15 using the training data set 14, and stores the trained determination model 15 into the storage unit 13 when completing the training.

Here, a loss function and a classification model used for training will be described. A loss function L expressed by the equation (4) is defined by a sum of a classification error (determination error) and a weight penalty. Here, X represents an explanatory variable of the training data, and y represents an objective variable (label) of the training data. Furthermore, $\rho_i$ is a coefficient set to each of d data items, and initial values are unified as one real value parameter specified by the user. Note that, in a case where a data item i is easy to interpret, $\rho_i$ is updated with $\gamma\rho_i$ so that the data item easily appears in a model, and in a case where it is difficult to interpret the data item i, $\rho_i$ is updated with $\delta\rho_i$ so that the data item is less likely to appear in the model, and training is performed. Here, $\gamma$ and $\delta$ are real value parameters that can be set by the user, and for example, $0 < \gamma < 1$ and $1 < \delta$.

[Math. 4]

$$\texttt{Loss function L(y, X, a)} \quad = \|y - aX\|_2^2 + \sum_i^d \rho_i a_i$$

| y, X: Training data | Classification error | Weight penalty |

$$\ldots \texttt{Equation(4)}$$

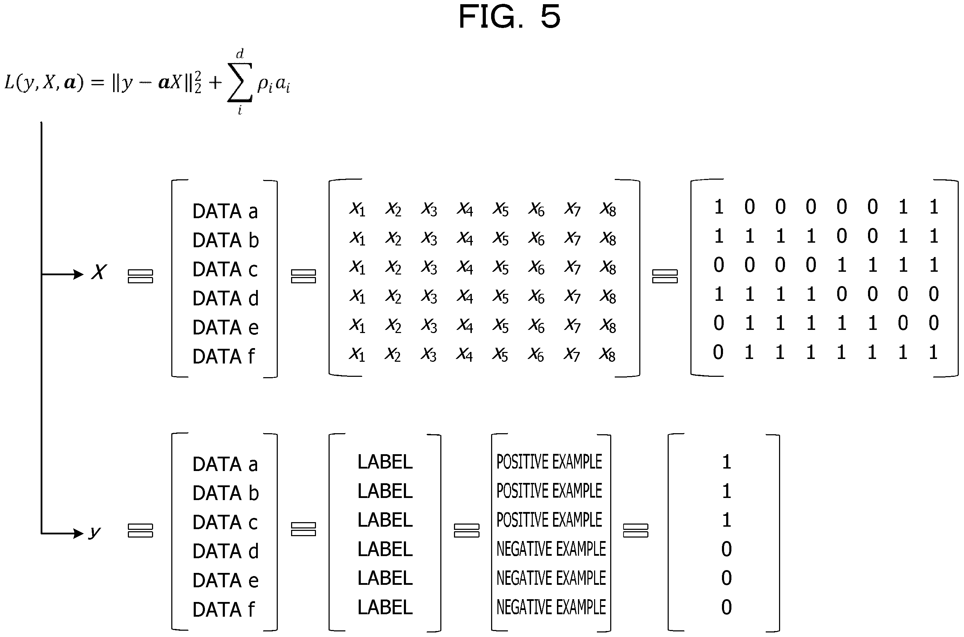

FIG. 5 is a diagram for explaining the loss function. As illustrated in FIG. 5, the training unit 21 substitutes a matrix of six rows and eight columns having explanatory variables (data item) of each piece of the data of the training data set 14, as rows, in "X" of the loss function L. For example, "$x_1, x_2, x_3, x_4, x_5, x_6, x_7, x_8$ = 1, 0, 0, 0, 0, 0, 1, 1" of the data a is set in the first line of X, "$x_1, x_2, x_3, x_4, x_5, x_6, x_7, x_8$ = 1, 1, 1, 1, 0, 0, 1, 1" of the data b is set in the second line, "$x_1, x_2, x_3, x_4, x_5, x_6, x_7, x_8$ = 0, 0, 0, 0, 1, 1, 1, 1" of the data c is set in the third line, "$x_1, x_2, x_3, x_4, x_5, x_6, x_7, x_8$ = 1, 1, 1, 1, 0, 0, 0, 0" of the data d is set in the fourth line, "$x_1, x_2, x_3, x_4, x_5, x_6, x_7, x_8$ = 0, 1, 1, 1, 1, 1, 0, 0" of the data e is set in the fifth line, and "$x_1, x_2, x_3, x_4, x_5, x_6, x_7, x_8$ = 0, 1, 1, 1, 1, 1, 1, 1" of the data f is set in the sixth line.

Furthermore, a matrix of six rows and one column having the label of each data of the training data set 14 as a row is substituted in "y" of the loss function L. For example, "label = positive example" of the data a is set in the first line of y, "label = positive example" of the data b is set in the second line, "label = positive example" of the data c is set in the third line, "label = negative example" of the data d is set in the fourth line, "label = negative example" of the data e is set in the fifth line, and "label = negative example" of the data f is set in the sixth line. In the calculation, the positive example is converted into "1" and the negative example is converted into "0".

Furthermore, $\rho_i$ is a value (weight) set for each data item, and is defined by the ease of the interpretation of each data item. For example, $\rho_1$ is set to the data item $x_1$, $\rho_2$ is set to the data item $x_2$, $\rho_3$ is set to the data item $x_3$, $\rho_4$ is set to the data item $\rho_4$, $\rho_5$ is set to the data item $x_5$, $\rho_6$ is set to the data item $x_6$, $\rho_7$ is set to the data item $x_7$, and $p_8$ is set to the data item $x_8$ so that optimization (minimization) of the loss function is calculated. Note that an optional value is set to $\rho_i$ at the time of training by the training unit 21.

Then, the training unit 21 optimizes the loss function L in which a value is set to each variable as described above and generates the determination model m (x) expressed by the equation (2), using $a_i$ obtained through optimization. In other words, the training unit 21 generates the determination model according to the regression equation obtained by minimizing the loss function L and stores the generated determination model into the storage unit 13 as the determination model 15. Note that, here, while an example is described in which the number of data items is d, d = 8 is set in the first embodiment.

The interaction processing unit 22 is a processing unit that includes a recommendation unit 23, a retraining unit 24, and a screen display unit 25 and acquires a user evaluation for a data item by an interactive approach to the user and retrains the determination model 15 considering the user evaluation.

Specifically, the interaction processing unit 22 manages the number of times of evaluation of each data item included in each piece of the training data of the training data set 14 and determines one piece of the training data as a recommendation target according to a predetermined priority criterion from among the training data. Then, the interaction processing unit 22 presents arbitrary k data items from among data items that match an input (label) of the data items in the training data to be recommended to the user and receives an evaluation for the presented data items.

Thereafter, the interaction processing unit 22 updates the weight penalty of the loss function according to the user evaluation, and then, retrains the determination model 15 using the training data set 14 and optimizes the determination model 15. That is, the interaction processing unit 22 repeats the recommendation of the data item, the retraining with the loss function reflecting the user evaluation, and the generation of the determination model 15 and effectively imposing a task so as to optimize the determination model 15 with a small number of tasks.

The recommendation unit 23 is a processing unit that searches for a data item to be evaluated by the user from among the plurality of data items included in the training data, using the trained determination model 15 and the training data set 14 and presents (recommends) the data item to the user.

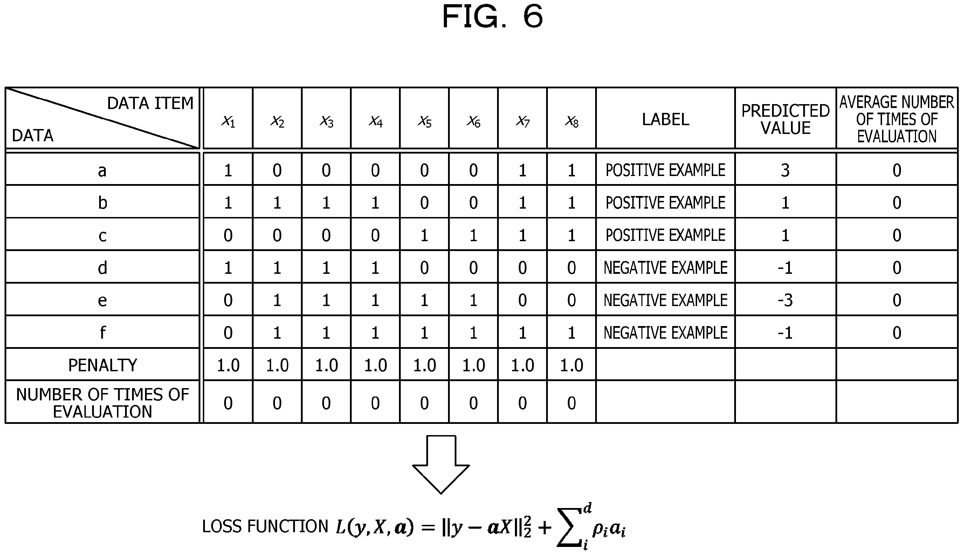

Here, recommendation of a data item will be described in detail. FIG. 6 is a diagram for explaining the recommendation of the data item. As illustrated in FIG. 6, the recommendation unit 23 manages a "predicted value", an "average number of times of evaluation", a "penalty", and "the number of times of evaluation", in addition to "a data item and a label", for each of the data a to the data f that are the training data.

The "predicted value" is an output value output by the determination model 15 when the training data is input to the determination model 15. The "average number of times of evaluation" is the number of times or a ratio of an evaluation of each data item included in a model and is updated each time when the determination model 15 is retrained. The "penalty" is a value set to the weight penalty "$\rho_i$" of the loss function and, for example, an initial value is "1.0" and is updated according to a user evaluation. The "number of times of evaluation" is the number of times of evaluating each data item. For example, the recommendation unit 23 initializes each of the d data items as $c_1$, $c_2$, $c_3$, to $c_d$ and updates "$c_i$" with "$c_i + 1$" when the data item i is selected by the user.

By managing such information, each time when the determination model 15 is retrained, the recommendation unit 23 determines a data item to be recommend and presents the data item to the user. For example, first, the recommendation unit 23 narrows the data item to be recommended. Specifically, the recommendation unit 23 selects training data in which the determination result made by the determination model 15 is correct, the average number of times of evaluation is the smallest, and an absolute value of the predicted value by the determination model 15 is the largest, from among the training data, as a target to be recommended to the user. That is, the recommendation unit 23 preferentially recommends the correctly-trained training data that has a large number of data items having a small number of times of evaluation and a large weight, to the user. Note that, in a case where the corresponding training data does not exist, the recommendation unit 23 randomly performs selection.

Next, the recommendation unit 23 presents and recommends the k data items that are selected from the data items that match the input according to the predetermined priority criterion to the user. Specifically, the recommendation unit 23 selects k data items of which a weight sign matches the label, have the small number of times of evaluation, and a large absolute value of the weight and recommends the selected data items to the user. That is, the recommendation unit 23 preferentially presents the data item that contributes to the determination result, has the small number of times of evaluation, and has a large weight to the user. Then, the recommendation unit 23 receives an evaluation indicating which one of "easy to interpret", "difficult to interpret", or "neither of the two" the presented data item corresponds to, from the user.

The retraining unit 24 is a processing unit that retrains the determination model 15 in consideration of the evaluation of the user obtained by the recommendation unit 23. Specifically, the retraining unit 24 generates the determination model 15 based on the regression equation obtained by minimizing the loss function L, using the training data set 14 and the equation (4), by a method similar to the training unit 21.

At this time, the retraining unit 24 reflects the user evaluation acquired by the recommendation unit 23 in "$\rho_i$" of the loss function and performs minimization. Specifically, in a case where the data item i is evaluated as "easy to interpret" according to the user evaluation, the retraining unit 24 updates "$\rho_i$" corresponding to the data item i with "$\gamma\rho_i$" and optimizes the loss function. On the other hand, in a case where the data item i is evaluated as "difficult to interpret" according to the user evaluation, the retraining unit 24 updates "$\rho_i$" corresponding to the data item i with "$\delta\rho_i$" and optimizes the loss function.

For example, a state where $\gamma = 1/2$, $\delta = 0.5$ and an initial value of each $\rho_i$ is 1.0 will be described as an example. In a case where the data item $x_3$ is evaluated as "easy to interpret", the retraining unit 24 updates "$\rho_3$" from "1.0" to "1.0 × 1/2 = 0.5" and calculates optimization of a loss function to which "1.0" is set for "$\rho_i$" of other data items. On the other hand, in a case where the data item $x_3$ is evaluated as "difficult to interpret", the retraining unit 24 updates "$\rho_3$" from "1.0" to "1.0 × 2 = 2.0" and calculates optimization of the loss function to which "1.0" is set for "$\rho_i$" of the other data items.

Then, the retraining unit 24 presents, to the user, the determination model 15 based on the regression equation obtained by minimizing the loss function in which the user evaluation is reflected in "$\rho_i$", and causes the user to evaluate whether or not the determination model 15 itself is easy to interpret.

Here, in a case where the determination model 15 itself is evaluated to be easy to interpret, the determination model 15 at that time is determined as a finally obtained determination model. On the other hand, in a case where the determination model 15 itself is evaluated to be difficult to interpret, the search and recommendation of the data item by the recommendation unit 23 and the retraining by the retraining unit 24 are reexecuted.

Returning to FIG. 3, the screen display unit 25 is a processing unit that generates an inquiry screen used to receive a user evaluation and displays the inquiry screen to the user. For example, the screen display unit 25 generates an inquiry screen used to inquire whether the data item searched by the recommendation unit 23 is "easy to interpret", "difficult to interpret", or "neither of the two" and displays the inquiry screen to the user. Furthermore, the screen display unit 25 generates an inquiry screen used to inquire whether the determination model 15 generated by the retraining unit 24 is "easy to interpret" or "difficult to interpret" and displays the inquiry screen to the user.

Note that the recommendation unit 23 and the retraining unit 24 receive a user evaluation on the inquiry screen generated by the screen display unit 25. Furthermore, the screen display unit 25 can display the inquiry screen on the display unit 12 of the information processing device 10 and can transmit the inquiry screen to a user terminal.

The output unit 26 is a processing unit that outputs the determination model 15 finally determined to be easy to interpret. For example, in a case where the determination model 15 displayed on the inquiry screen generated by the screen display unit 25 is determined to be "easy to interpret", the output unit 26 stores the displayed determination model 15 in the storage unit 13, outputs the determination model 15 to the user terminal, or outputs the determination model 15 to any output destination.

[Specific Examples]

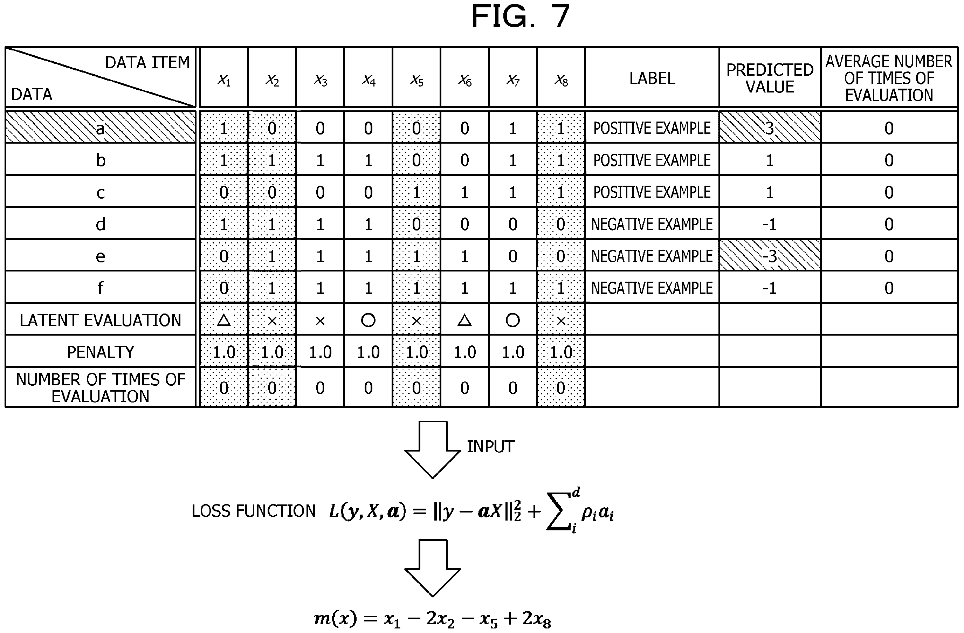

Next, specific examples of retraining of the determination model 15 considering a user evaluation will be described with reference to FIGs. 7 to 16. Here, it is assumed that k = 2, $\gamma$ = 1/2, and $\delta$ = 2.

(First Loop)

FIG. 7 is a diagram for explaining a first loop of the specific example. As illustrated in FIG. 7, the interaction processing unit 22 substitutes the training data set 14 illustrated in FIG. 4 in the equation (4) and performs retraining so as to generate a determination model 15 "m (x) = $x_1$ - 2$x_2$ - $x_5$ + 2$x_8$". Note that, a "latent evaluation" illustrated in FIG. 7 represents latent ease of interpretation of each data item and is described in the specific example for easy explanation. However, the latent evaluation is unknown information in actual processing.

In this case, the interaction processing unit 22 presents the data items the user. For example, because the label matches the predicted value for each piece of the data a to the data f, the interaction processing unit 22 determines that all the determinations are correct. Subsequently, although the interaction processing unit 22 selects data having a small average number of times of evaluation from among data of which a predicted value is correct, the interaction processing unit 22 determines that all the numbers of the average times of evaluation are equal because this is the first loop. Then, the interaction processing unit 22 specifies the data a and the data e having a large absolute value of the predicted value from among the data having the small average number of times of evaluation and randomly selects the data a.

Thereafter, the interaction processing unit 22 specifies the data items $x_1$ and $x_8$ that match the data a and of which the labels and the weights match, among "$x_1$, $x_2$, $x_5$, and $x_8$" included in the determination model 15 "m (x) = $x_1$ - 2$x_2$ - $x_5$ + 2$x_8$", from among the data items $x_1$ to $x_8$ of the data a. For example, the interaction processing unit 22 specifies the data items $x_1$ and $x_8$, to which "1" is set, that are the data items of the data a, from among "$x_1$, $x_2$, $x_5$, and $x_8$" included in the determination model 15 Then, because a weight of the determination model 15 corresponding to the specified data item $x_1$ is °1", a weight of the determination model 15 corresponding to the data item $x_8$ is "2", and both match the label "positive example" of the data a, the interaction processing unit 22 determines the data items $x_1$ and $x_8$ as recommendation targets. In other words, the interaction processing unit 22 estimates that the data a is determined as a positive example due to (contributed) the data items $x_1$ and $x_8$.

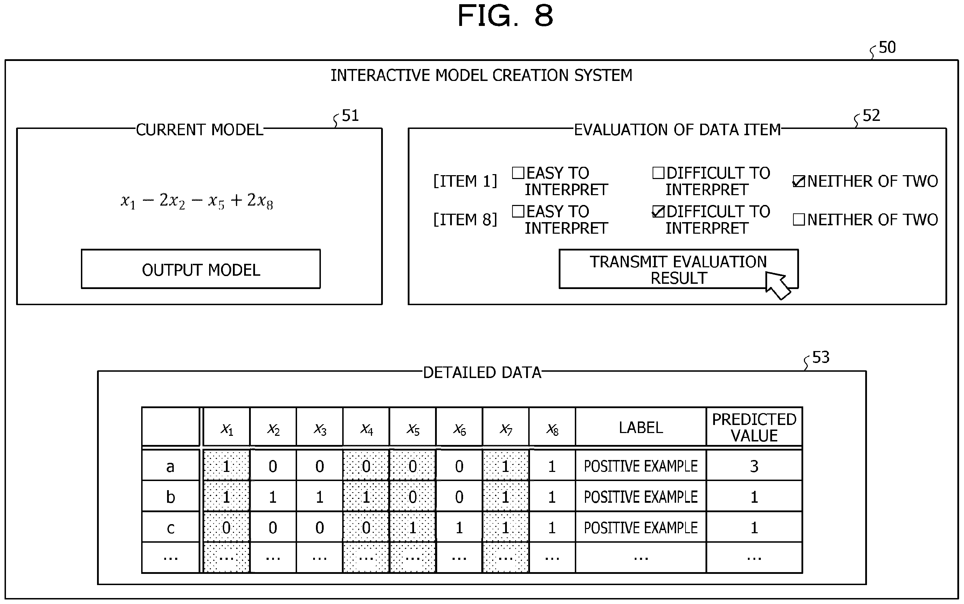

Then, the interaction processing unit 22 generates an inquiry screen in which a current determination model 15 and a data item to be recommended are displayed, and presents the inquiry screen to the user. FIG. 8 is a diagram for explaining an exemplary inquiry screen. As illustrated in FIG. 8, the interaction processing unit 22 generates an inquiry screen 50 including an area 51 indicating a current model, an area 52 for receiving am evaluation of a data item, and an area 53 for data details, and displays the inquiry screen 50 to the user.

Specifically, the interaction processing unit 22 displays the current determination model 15 (m (x)) in the area 51 indicating the current model, and also displays a button used to select whether or not to output the model. Furthermore, the interaction processing unit 22 displays a "data item" determined as a recommendation target in the area 52 for receiving the evaluation of the data item, and also displays a button or the like used to select whether the data item is "easy to interpret", "difficult to interpret", or "neither of the two". Furthermore, the interaction processing unit 22 displays the training data set 14 in the area 53 for data details.

Note that, in this specific example, it is assumed that the interaction processing unit 22 acquire an evaluation "neither of the two" from the user for the recommended data item $x_1$ and acquire an evaluation "difficult to interpret" from the user for the data item $x_8$. Furthermore, it is assumed that the interaction processing unit 22 do not receive selection of "output a model" from the user for the determination model 15 "m (x) = $x_1$ - $2x_2$ - $x_5$ + $2x_8$" and determine that the determination model 15 is not a model that can be easily interpreted. Note that, here, an example has been described in which both of the model and the data item are inquired at the same time. However, it is possible to recommend a data item after the evaluation of the model is inquired and the model is evaluated as "difficult to interpret".

(Second Loop)

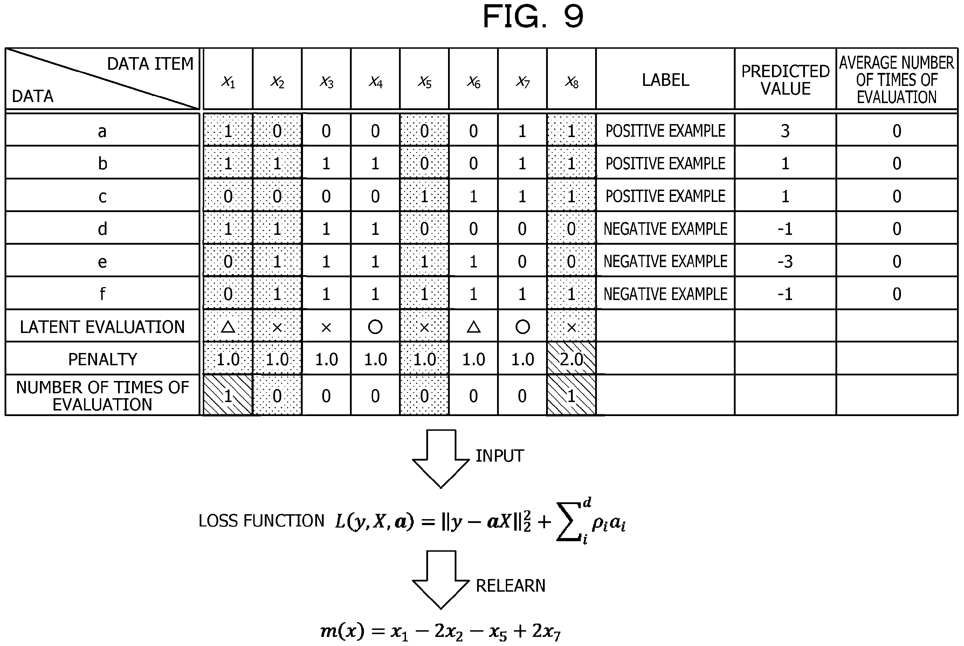

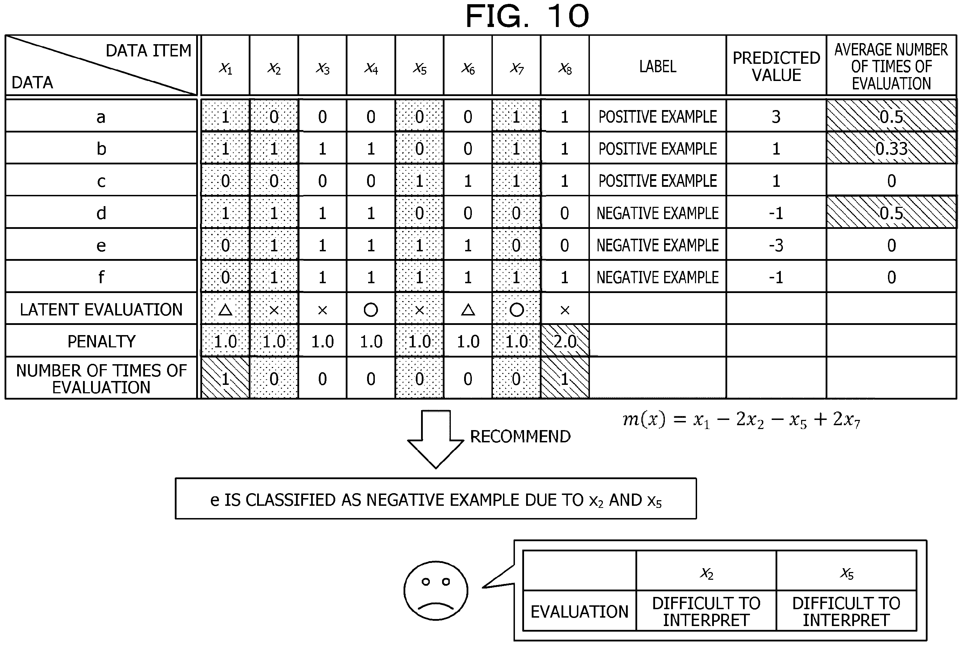

FIGs. 9 and 10 are diagrams for explaining a second loop of the specific example. As illustrated in FIG. 9, since the data items $x_1$ and $x_8$ are recommended to the user, the interaction processing unit 22 increments the number of times of evaluation only by one, and changes the number of times of evaluation of each data item to "1". Furthermore, since the data item $x_8$ is evaluated as "difficult to interpret", the interaction processing unit 22 changes the penalty "$\rho_8$" of the data item $x_8$ to "current value (1.0) $\times$ 2 = 2.0" based on "$\delta\rho_i$". Thereafter, the interaction processing unit 22 retrains the determination model 15 using the loss function to which the value of the penalty "$\rho_i$" of each data item $x_i$ is set and generates the determination model 15 "m (x) = $x_1$ - $2x_2$ - $x_5$ + $2x_7$".

Then, the interaction processing unit 22 updates the area 51 indicating the current model in the inquiry screen 50, displays the retrained determination model 15 "m (x) = $x_1$ - $2x_2$ - $x_5$ + $2x_7$", and inquires a user evaluation. Here, it is assumed that the interaction processing unit 22 does not receive the selection of "output a model" from the user for the determination model 15 and determine that the determination model 15 is not a model that can be easily interpreted.

In a case where the retrained model is difficult to be interpreted, as illustrated in FIG. 10, the interaction processing unit 22 updates the average number of times of evaluation. Specifically, since user evaluation has been performed on the data item $x_1$ of the two data items $x_1$ and $x_7$ that match the data a among the data items "$x_1$", "$x_2$", "$x_5$", and "$x_7$" existing in the determination model 15, for the data a, the interaction processing unit 22 calculates and sets the average number of times of evaluation as "1/2 = 0.5". Note that matching indicates a data item to which "1" is set in the data a from among the data items appearing in the determination model 15.

Similarly, since user evaluation has been performed on the data item $x_1$ of the three data items $x_1$, $x_5$, and $x_7$ that match the data b among the data items "$x_1$", "$x_2$", "$x_5$", and "$x_7$" existing in the determination model 15, for the data b, the interaction processing unit 22 calculates and sets the average number of times of evaluation as "1/3 = 0.33".

Furthermore, for the data c, since the two data items $x_5$ and $x_7$ that match the data c are not evaluated from among the data items existing in the determination model 15, the interaction processing unit 22 calculates and sets the average number of times of evaluation as "0/2 = 0". Similarly, for the data d, since user evaluation has been performed on the data item $x_1$ of two data items $x_1$ and $x_2$ that match the data d among the data items existing in the determination model 15, the interaction processing unit 22 calculates and sets the average number of times of evaluation as "1/2 = 0.5".

Furthermore, for the data e, since the two data items $x_2$ and $x_5$ that match the data e are not evaluated from among the data items existing in the determination model 15, the interaction processing unit 22 calculates and sets the average number of times of evaluation as "0/2 = 0". Similarly, for the data f, since the three data items $x_2$, $x_5$, and $x_7$ that match the data f are not evaluated among the data items existing in the determination model 15, the interaction processing unit 22 calculates and sets the average number of times of evaluation as "0/2 = 0".

In this case, the interaction processing unit 22 presents the data items the user. For example, because the label matches the predicted value for each piece of the data a to the data f, the interaction processing unit 22 determines that all the determinations are correct. Subsequently, the interaction processing unit 22 specifies data c, e, and f that is data having the small average number of times of evaluation, from among the data of which the predicted value is correct. Then, the interaction processing unit 22 selects the data e having a large absolute value of the predicted value from among the data having the small average number of times of evaluation.

Thereafter, the interaction processing unit 22 specifies the data items $x_2$ and $x_5$ that match the data e and of which the labels and the weights match, among "$x_1$, $x_2$, $x_5$, and $x_7$" included in the determination model 15 "m (x) = $x_1$ - $2x_2$ - $x_5$ + $2x_7$", from among the data items $x_1$ to $x_8$ of the data e. For example, because a weight of the determination model 15 corresponding to the specified data item $x_2$ is "-2", a weight of the determination model 15 corresponding to the data item $x_7$ is "-1", both match the label "negative example" of the data e, and the number of matches is equal to or less than k (= 2), the interaction processing unit 22 determines the data items $x_2$ and $x_5$ as recommendation targets. In other words, the interaction processing unit 22 estimates that the data e is determined as a negative example due to the data items $x_2$ and $x_5$.

Then, the interaction processing unit 22 updates the inquiry screen 50 and presents the inquiry screen 50 that displays the data item to be recommended to the user. Here, it is assumed that the interaction processing unit 22 acquire an evaluation of "difficult to interpret" from the user for each of the recommended data items $x_2$ and $x_5$.

(Third Loop)

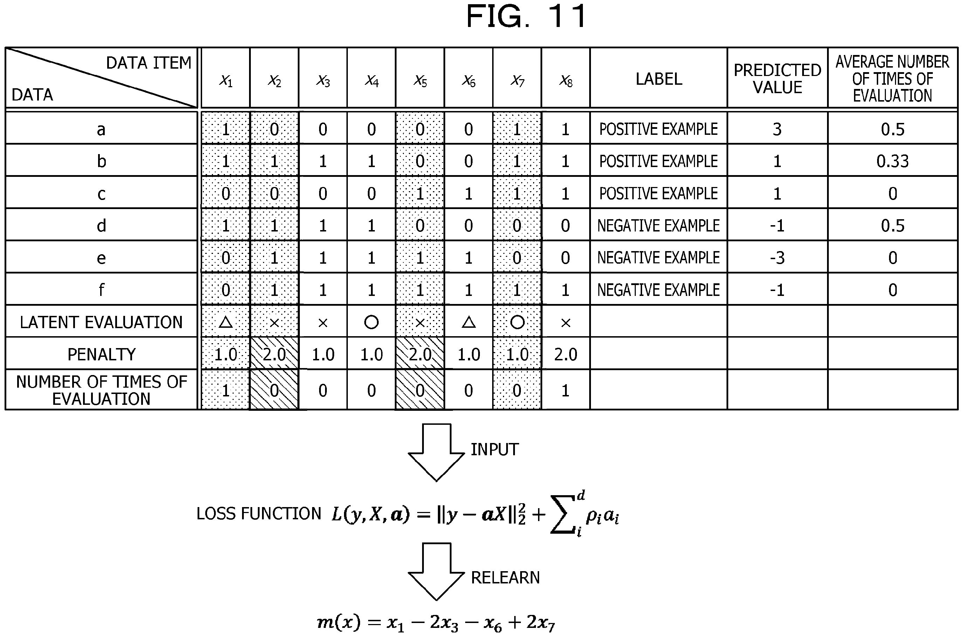

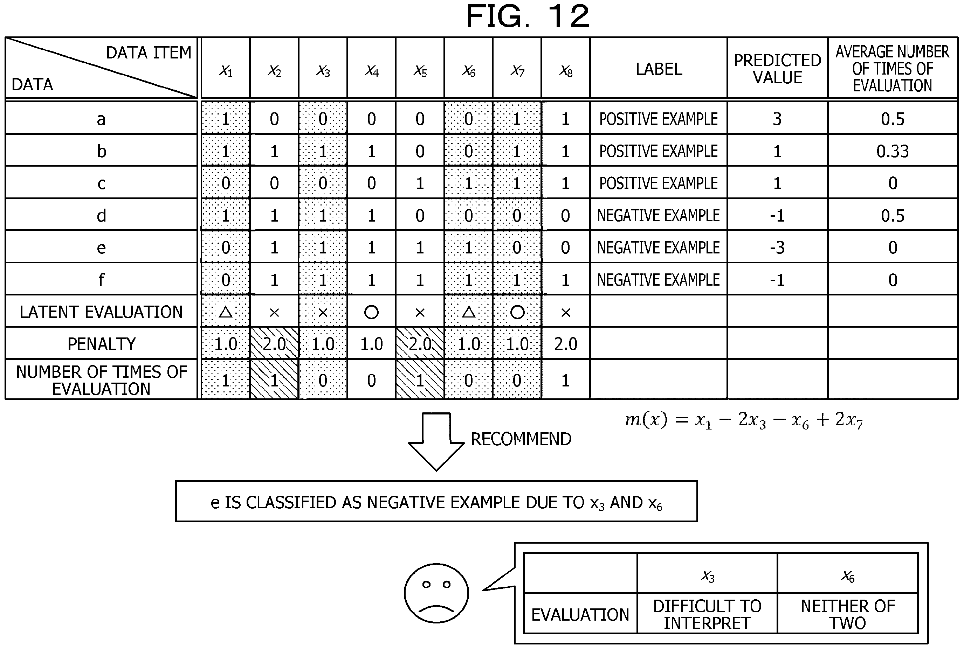

FIGs. 11 and 12 are diagrams for explaining a third loop of the specific example. As illustrated in FIG. 11, since the data items $x_2$ and $x_5$ are recommended to the user, the interaction processing unit 22 increments the number of times of evaluation only by one, and changes the number of times of evaluation of each data item to "1". Furthermore, since both of the data items $x_2$ and $x_8$ are evaluated as "difficult to interpret", the interaction processing unit 22 changes the penalty "$\rho_2$" of the data item $x_2$ and the penalty "$\rho_8$" of the data item $x_8$ to "current value (1.0) $\times$ 2 = 2.0" based on "$\delta\rho_i$". Thereafter, the interaction processing unit 22 retrains the determination model 15 using the loss function to which the value of the penalty "$\rho_i$" of each data item $x_i$ is set and generates the determination model 15 "m (x) = $x_1$ - $2x_3$ - $x_6$ + $2x_7$".

Then, the interaction processing unit 22 updates the area 51 indicating the current model in the inquiry screen 50, displays the retrained determination model 15 "m (x) = $x_1$ - $2x_3$ - $x_6$ + $2x_7$", and inquires a user evaluation. Here, it is assumed that the interaction processing unit 22 does not receive the selection of "output a model" from the user, regarding the determination model 15 and determine that the determination model 15 is not a model that can be easily interpreted.

In a case where the retrained model is difficult to be interpreted, as illustrated in FIG. 12, the interaction processing unit 22 updates the average number of times of evaluation. Specifically, the interaction processing unit 22 specifies the two data items $x_1$ and $x_7$ that match the data a, from among the data items "$x_1$", "$x_3$", "$x_6$", and "$x_7$" existing in the determination model 15, for the data a. Then, since the data item $x_1$, of the specified two data items $x_1$ and $x_7$, is included in the data items $x_1$, $x_8$, $x_2$, and $x_5$ that have been evaluated until now, the interaction processing unit 22 calculates the average number of times of evaluation as "1/2 = 0.5" and sets the calculated value to the data a.

Similarly, the interaction processing unit 22 specifies the three data items $x_1$, $x_3$, and $x_7$ that match the data b from among the data items "$x_1$", "$x_3$", "$x_6$", and "$x_7$" existing in the determination model 15, for the data b. Then, since the data item $x_1$, of the specified three data items $x_1$, $x_3$, and $x_7$, is included in the data items $x_1$, $x_8$, $x_2$, and $x_5$ that have been evaluated until now, the interaction processing unit 22 calculates the average number of times of evaluation as "1/3 = 0.33" and sets the calculated value to the data b.

Furthermore, the interaction processing unit 22 specifies the two data items $x_6$ and $x_7$ that match the data c from among the data items "$x_1$", "$x_3$", "$x_6$", and "$x_7$" existing in the determination model 15, for the data c. Then, since these are not included in the data items $x_1$, $x_8$, $x_2$, and $x_5$ that have been evaluated until now, the interaction processing unit 22 calculates the average number of times of evaluation as "0/2 = 0" and sets the calculated value to the data c.

Furthermore, for the data d, the interaction processing unit 22 specifies the two data items $x_1$ and $x_3$ that match the data d from among the data items "$x_1$", "$x_3$", "x6", and "$x_7$" existing in the determination model 15. Then, since the data item $x_1$, of the specified two data items $x_1$ and $x_3$, is included in the data items $x_1$, $x_8$, $x_2$, and $x_5$ that have been evaluated until now, the interaction processing unit 22 calculates the average number of times of evaluation as "1/2 = 0.5" and sets the calculated value to the data d.

Furthermore, for the data e, the interaction processing unit 22 specifies the two data items $x_3$ and $x_6$ that match the data e from among the data items "$x_1$", "$x_3$", "$x_6$", and "$x_7$" existing in the determination model 15. Then, since these are not included in the data items $x_1$, $x_8$, $x_2$, and $x_5$ that have been evaluated until now, the interaction processing unit 22 calculates the average number of times of evaluation as "0/2 = 0" and sets the calculated value to the data e.

Furthermore, for the data f, the interaction processing unit 22 specifies the three data items $x_3$, $x_6$, and $x_7$ that match the data f from among the data items "$x_1$", "$x_3$", "$x_6$", and "$x_7$" existing in the determination model 15. Then, since these are not included in the data items $x_1$, $x_8$, $x_2$, and $x_5$ that have been evaluated until now, the interaction processing unit 22 calculates the average number of times of evaluation as "0/3 = 0" and sets the calculated value to the data f.

In this case, the interaction processing unit 22 presents the data items the user. For example, because the label matches the predicted value for each piece of the data a to the data f, the interaction processing unit 22 determines that all the determinations are correct. Subsequently, the interaction processing unit 22 specifies data c, e, and f that is data having the small average number of times of evaluation, from among the data of which the predicted value is correct. Then, the interaction processing unit 22 selects the data e having a large absolute value of the predicted value from among the data having the small average number of times of evaluation.

Thereafter, the interaction processing unit 22 specifies the data items $x_3$ and $x_6$ that match the data e and of which the labels and the weights match, among "$x_1$, $x_3$, $x_6$, and $x_7$" included in the determination model 15 "m (x) = $x_1$ - $2x_3$ - $x_6$ + $2x_7$", from among the data items $x_1$ to $x_8$ of the data e. For example, because a weight of the determination model 15 corresponding to the specified data item $x_3$ is "-2", a weight of the determination model 15 corresponding to the data item $x_6$ is "-1", both match the label "negative example" of the data e, and the number of matches is equal to or less than k (= 2), the interaction processing unit 22 determines the data items $x_3$ and $x_6$ as recommendation targets. In other words, the interaction processing unit 22 estimates that the data e is determined as a negative example due to the data items $x_3$ and $x_6$.

Then, the interaction processing unit 22 updates the inquiry screen 50 and presents the inquiry screen that displays the data item to be recommended to the user. Here, it is assumed that the interaction processing unit 22 acquire an evaluation of "difficult to interpret" from the user for the recommended data item $x_3$ and acquire an evaluation "neither of the two" from the user for the data item $x_6$.

(Fourth Loop)

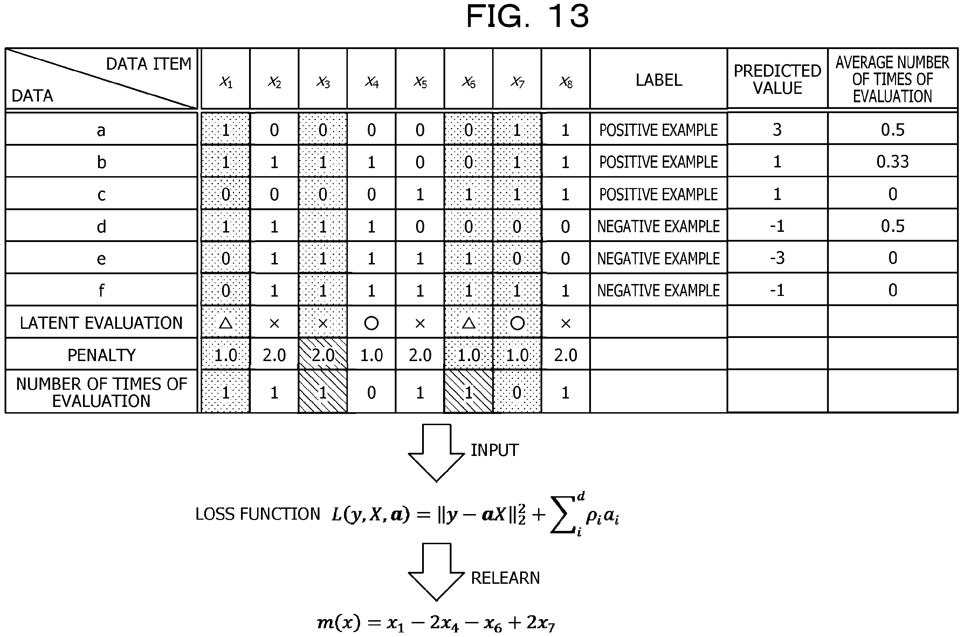

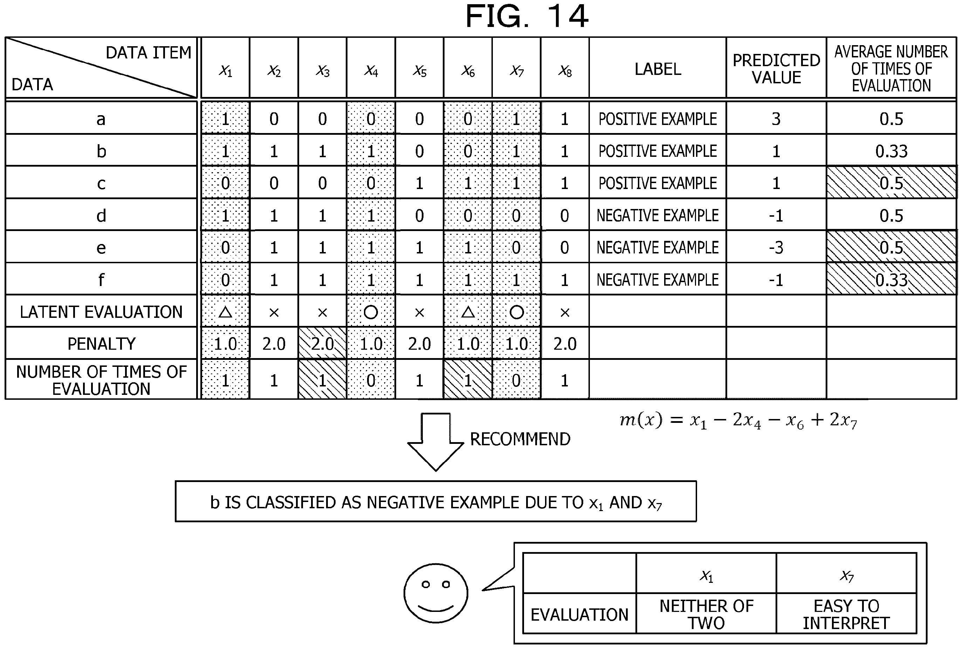

FIGs. 13 and 14 are diagrams for explaining a fourth loop of the specific example. As illustrated in FIG. 13, since the data items $x_3$ and $x_6$ are recommended to the user, the interaction processing unit 22 increments the number of times of evaluation only by one, and changes the number of times of evaluation of each data item to "1". Furthermore, since the data item $x_3$ is evaluated as "difficult to interpret", the interaction processing unit 22 changes the penalty "$\rho_3$" of the data item $x_3$ to "current value (1.0) $\times$ 2 = 2.0" based on "$\delta\rho_i$". Thereafter, the interaction processing unit 22 retrains the determination model 15 using the loss function to which the value of the penalty "$\rho_i$" of each data item $x_i$ is set and generates the determination model 15 "m (x) = $x_1$ - $2x_4$ - $x_6$ + $2x_7$".

Then, the interaction processing unit 22 updates the area 51 indicating the current model in the inquiry screen 50, displays the retrained determination model 15 "m (x) = $x_1$ - $2x_4$ - $x_6$ + $2x_7$", and inquires a user evaluation. Here, it is assumed that the interaction processing unit 22 does not receive the selection of "output a model" from the user for the determination model 15 and determine that the determination model 15 is not a model that can be easily interpreted.

In a case where the retrained model is difficult to be interpreted, as illustrated in FIG. 14, the interaction processing unit 22 updates the average number of times of evaluation. Specifically, the interaction processing unit 22 specifies the two data items $x_1$ and $x_7$ that match the data a, from among the data items "$x_1$", "$x_4$", "$x_6$", and "$x_7$" existing in the determination model 15, for the data a. Then, since the data item $x_1$, of the specified two data items $x_1$ and $x_7$, is included in the data items $x_1$, $x_8$, $x_2$, $x_5$, $x_3$, and $x_6$ that have been evaluated until now, the interaction processing unit 22 calculates the average number of times of evaluation as "1/2 = 0.5" and sets the calculated value to the data a.

Similarly, the interaction processing unit 22 specifies the three data items $x_1$, $x_4$, and $x_7$ that match the data b from among the data items "$x_1$", "$x_4$", "$x_6$", and "$x_7$" existing in the determination model 15, for the data b. Then, since the data item $x_1$, of the specified three data items $x_1$, $x_4$, and $x_7$, is included in the data items $x_1$, $x_8$, $x_2$, $x_5$, $x_3$, and $x_6$ that have been evaluated until now, the interaction processing unit 22 calculates the average number of times of evaluation as "1/3 = 0.33" and sets the calculated value to the data b.

Furthermore, the interaction processing unit 22 specifies the two data items $x_6$ and $x_7$ that match the data c from among the data items "$x_1$", "$x_4$", "$x_6$", and "$x_7$" existing in the determination model 15, for the data c. Then, since the data item $x_6$, of the specified two data items $x_6$ and $x_7$, is included in the data items $x_1$, $x_8$, $x_2$, $x_5$, $x_3$, and $x_6$ that have been evaluated until now, the interaction processing unit 22 calculates the average number of times of evaluation as "1/2 = 0.5" and sets the calculated value to the data c.

Furthermore, for the data d, the interaction processing unit 22 specifies the two data items $x_1$ and $x_4$ that match the data d from among the data items "$x_1$", "$x_4$", "$x_6$", and "$x_7$" existing in the determination model 15. Then, since the data item $x_1$, of the specified two data items $x_1$ and $x_4$, is included in the data items $x_1$, $x_8$, $x_2$, $x_5$, $x_3$, and $x_6$ that have been evaluated until now, the interaction processing unit 22 calculates the average number of times of evaluation as "1/2 = 0.5" and sets the calculated value to the data d.

Furthermore, for the data e, the interaction processing unit 22 specifies the two data items $x_4$ and $x_6$ that match the data e from among the data items "$x_1$", "$x_4$", "$x_6$", and "$x_7$" existing in the determination model 15. Then, since the data item $x_6$, of the specified two data items $x_4$ and $x_6$, is included in the data items $x_1$, $x_8$, $x_2$, $x_5$, $x_3$, and $x_6$ that have been evaluated until now, the interaction processing unit 22 calculates the average number of times of evaluation as "1/2 = 0.5" and sets the calculated value to the data e.

Furthermore, for the data f, the interaction processing unit 22 specifies the three data items $x_4$, $x_6$, and $x_7$ that match the data f from among the data items "$x_1$", "$x_4$", "$x_6$", and "$x_7$" existing in the determination model 15. Then, since the data item $x_6$, of the specified three data items $x_4$, $x_6$, and $x_7$, is included in the data items $x_1$, $x_8$, $x_2$, $x_5$, $x_3$, and $x_6$ that have been evaluated until now, the interaction processing unit 22 calculates the average number of times of evaluation as "1/3 = 0.33" and sets the calculated value to the data e.

In this case, the interaction processing unit 22 presents the data items the user. For example, because the label matches the predicted value for each piece of the data a to the data f, the interaction processing unit 22 determines that all the determinations are correct. Subsequently, the interaction processing unit 22 specifies data b and f that is data having the small average number of times of evaluation, from among the data of which the predicted value is correct.

Then, since the absolute values of the predicted values of the data b and the data f with the small average number of times of evaluation are equal, the interaction processing unit 22 randomly selects the data b.

Thereafter, the interaction processing unit 22 specifies the data items $x_1$ and $x_7$ that match the data b and of which the labels and the weights match, from among "$x_1$, $x_4$, $x_6$, and $x_7$" included in the determination model 15 "m (x) = $x_1$ - $2x_4$ - $x_6$ + $2x_7$", among the data items $x_1$ to $x_8$ of the data b. For example, a weight of the determination model 15 corresponding to the specified data item $x_1$ is "1", a weight of the determination model 15 corresponding to the data item $x_4$ is "-2", a weight of the determination model 15 corresponding to the data item $x_7$ is "2", and the interaction processing unit 22 specifies the data items $x_1$ and $x_7$ that match the label "positive example" of the data b. Then, since the number of specified data items is equal to or less than k (= 2), the interaction processing unit 22 determines the data items $x_1$ and $x_7$ as recommendation targets. In other words, the interaction processing unit 22 estimates that the data b is determined as a positive example due to the data items $x_1$ and $x_7$.

Then, the interaction processing unit 22 updates the inquiry screen 50 and presents the inquiry screen 50 that displays the data item to be recommended to the user. Here, it is assumed that the interaction processing unit 22 acquire an evaluation of "neither of the two" from the user for the recommended data item $x_1$ and acquire an evaluation "easy to interpret" from the user for the data item $x_7$.

(Fifth Loop)

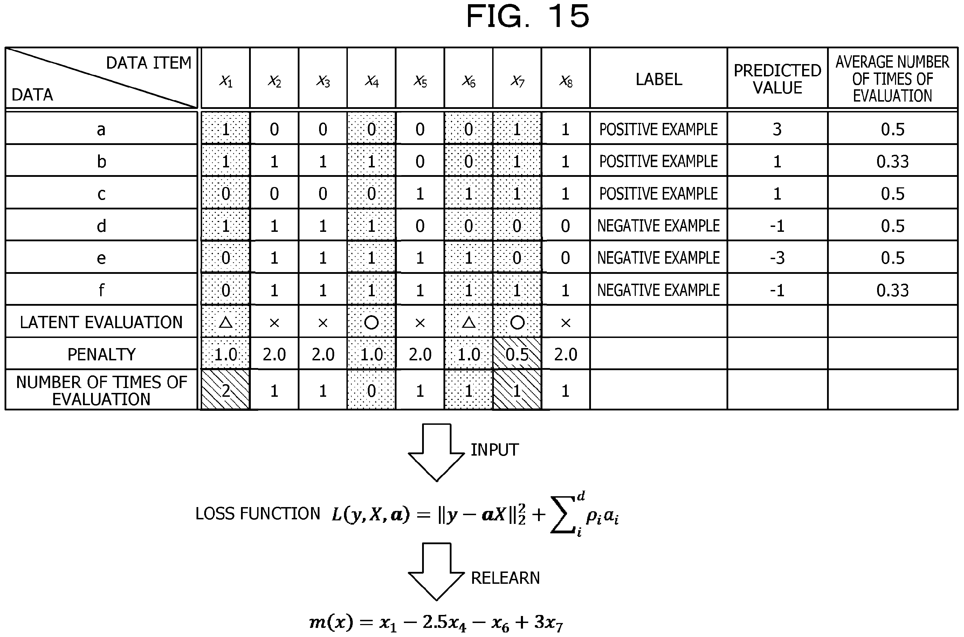

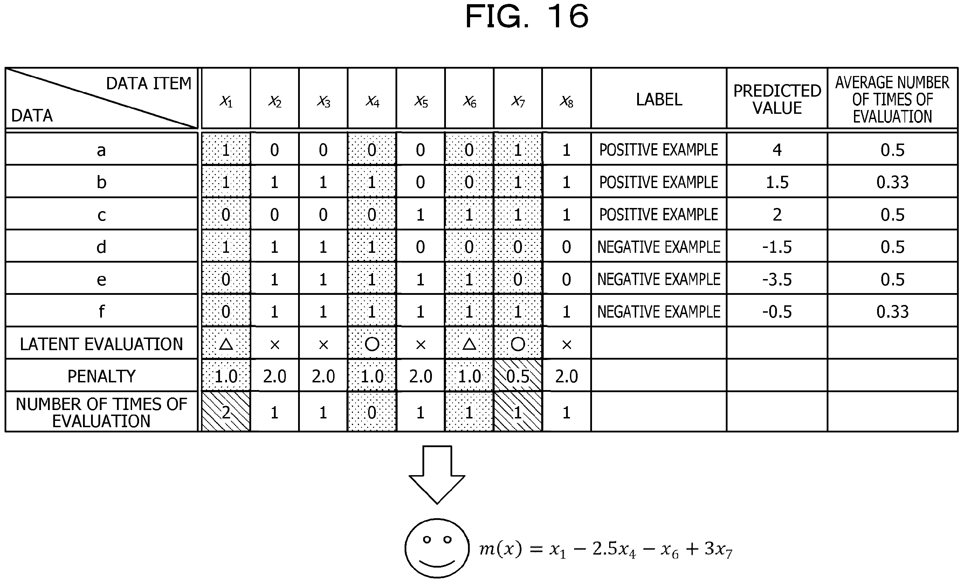

FIGs. 15 and 16 are diagrams for explaining a fifth loop of the specific example. As illustrated in FIG. 15, since the data items $x_1$ and $x_7$ are recommended to the user, the interaction processing unit 22 increments the number of times of evaluation only by one, and changes the number of times of evaluation of each data item to "2" and "1". Furthermore, since the data item $x_7$ is evaluated as "easy to interpret", the interaction processing unit 22 changes the penalty "$\rho_7$" of the data item $x_7$ to "current value (1.0) $\times$ 1/2 = 0.5" based on "$\gamma\rho_i$". Thereafter, the interaction processing unit 22 retrains the determination model 15 using the loss function to which the value of the penalty "$\rho_i$" of each data item $x_i$ is set and generates the determination model 15 "m (x) = $x_1$ - $2.5x_4$ - $x_6$ + $3x_7$".

Thereafter, as illustrated in FIG. 16, the interaction processing unit 22 updates the area 51 indicating the current model in the inquiry screen 50, displays the retrained determination model 15 "m (x) = $x_1$ - $2.5x_4$ - $x_6$ + $3x_7$", and inquires a user evaluation. Here, since the selection of "output a model" is received from the user about the determination model 15, the interaction processing unit 22 determines that a model that can be easily interpreted is generated and outputs the current determination model 15 "m (x) = $x_1$ - $2.5x_4$ - $x_6$ + $3x_7$". Note that, each average number of times of evaluation illustrated in FIG. 16 is updated by a method similar to the loops 1 to 4.

[Flow of Processing]

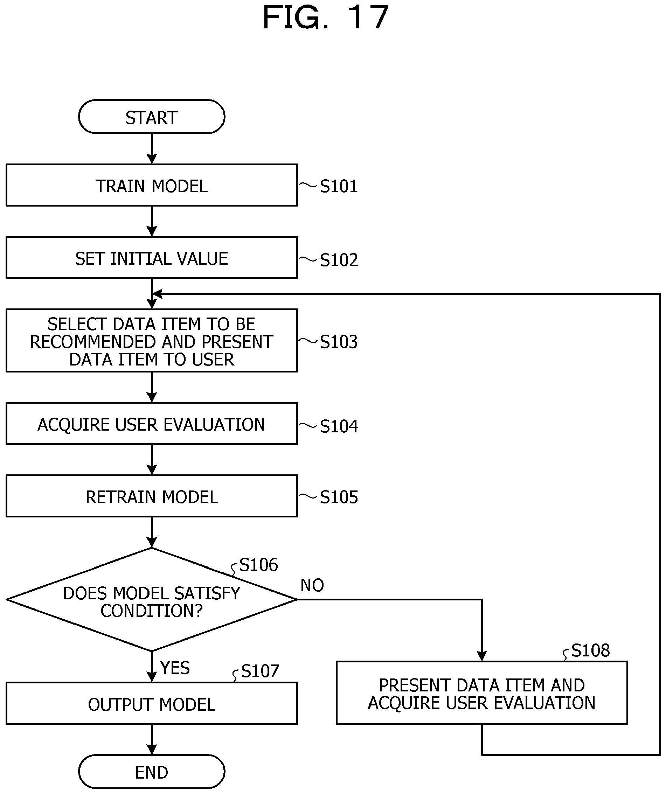

Next, processing of the model generation described above will be described. FIG. 17 is a flowchart illustrating a flow of the processing. As illustrated in FIG. 17, the training unit 21 trains a model (determination model) and stores the model in the storage unit 13 (S101). Subsequently, the interaction processing unit 22 initializes coefficient setting for updating a penalty used to retrain the model, setting of the number of data items to be recommended, or the like (S102).

Then, the interaction processing unit 22 selects a data item to be recommended and presents the data item to the user (S103) and acquires a user evaluation for the presented data item (S104). Subsequently, the interaction processing unit 22 retrains the model, using the loss function reflecting the user evaluation (S105).

Then, in a case where the retrained model is presented to the user and it is determined that the model satisfies a user's condition (S106: Yes), the interaction processing unit 22 outputs a current model (S107). On the other hand, in a case where it is determined that the model does not satisfy the user's condition (S106: No), the interaction processing unit 22 acquires the user evaluation and retrains the model (S108) and repeats the processing in and subsequent to S103.

[Effects]

As described above, when imposing the task of "evaluating the data item that contributes to an output of a model for a certain input" to a person, the information processing device 10 can simplify the task by reducing the number of data items that the person has to see for the task. Furthermore, the information processing device 10 measures ease of interpretation of each data item from an evaluation of the person through the task and adjusts the ease of appearance in the model, and it is possible to optimize the model in consideration of the ease of the interpretation of each data item. As a result, the information processing device 10 can generate a highly interpretable classification model with less burden on the person.

[Second Embodiment]

Incidentally, while the embodiment of the present invention has been described above, the present invention may be carried out in a variety of different modes in addition to the embodiment described above.

[Numerical Values, etc.]

The exemplary numerical values, the loss function, the number of data items, the number of pieces of training data, and the like used in the embodiment described above are merely examples, and may be optionally changed. Furthermore, the loss function used to generate a model is not limited to the one expressed by the equation (4), and another objective function including a weight penalty that changes depending on whether it is "easy to interpret" or "difficult to interpret" may be adopted. Furthermore, the processing flow may also be appropriately changed within a range with no inconsistencies. Furthermore, the device that executes the training unit 21 and the device that executes the interaction processing unit 22 and the output unit 26 may be implemented by separate devices.

[Models, etc.]

While the example of reflecting the user evaluation in the model once trained and performing retraining has been described in the embodiment above, the present invention is not limited to this, and it is also possible to reflect the user evaluation in the model before training by the method according to the embodiment described above and perform training. Furthermore, the timing for terminating the generation (retraining) of the linear model is not limited to the user evaluation, and may be optionally set as when execution is carried out a predetermined number of times or the like. Furthermore, while the example of using the loss function (loss function) as an exemplary objective function has been described in the embodiment above, the present invention is not limited to this, and another objective function, such as a cost function, may be adopted.

[System]

Pieces of information including a processing procedure, a control procedure, a specific name, various types of data, and parameters described above or illustrated in the drawings may be optionally modified unless otherwise noted. Note that the recommendation unit 23 is an example of a selection unit, a presentation unit, and a reception unit, and the retraining unit 24 is an example of an execution unit. Furthermore, the processing for receiving the user evaluation is an example of a user requirement, and it is possible to define the user requirement in advance and automatically receive the user evaluation.

In addition, each component of each device illustrated in the drawings is functionally conceptual and does not necessarily have to be physically configured as illustrated in the drawings. In other words, specific forms of distribution and integration of the individual devices are not restricted to those illustrated in the drawings. That is, the whole or a part of the devices may be configured by being functionally or physically distributed or integrated in optional units according to various loads, usage situations, or the like.

Moreover, all or any part of individual processing functions performed in each device can be implemented by a central processing unit (CPU) and a program analyzed and executed by the CPU or may be implemented as hardware by wired logic.

[Hardware]

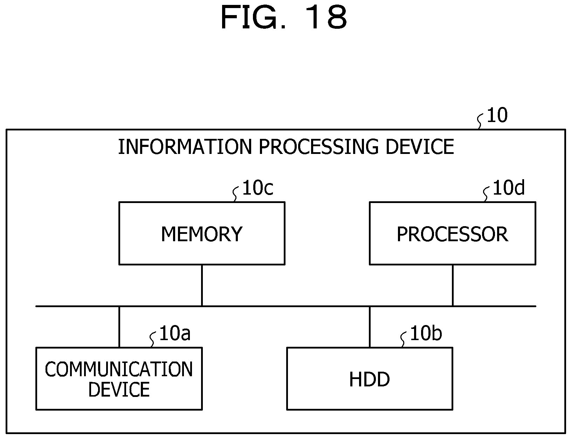

Next, an exemplary hardware configuration of the information processing device 10 will be described. FIG. 18 is a diagram illustrating an exemplary hardware configuration. As illustrated in FIG. 18, the information processing device 10 includes a communication device 10a, a hard disk drive (HDD) 10b, a memory 10c, and a processor 10d. Furthermore, the individual units illustrated in FIG. 19 are mutually connected by a bus or the like.

The processor 10d reads, from the HDD 10b or the like, a program that executes processing similar to that of each processing unit illustrated in FIG. 3, and loads the program in the memory 10c, thereby operating a process for executing each function described with reference to FIG. 3 or the like. For example, this process executes a function similar to the function of each processing unit included in the information processing device 10. Specifically, the processor 10d reads, from the HDD 10b or the like, a program having a function similar to that of the training unit 21, the interaction processing unit 22, the output unit 26, or the like. Then, the processor 10d executes a process for executing processing similar to that of the training unit 21, the interaction processing unit 22, the output unit 26, or the like.

In this manner, the information processing device 10 reads and executes a program so as to operate as an information processing device that executes a model generation method. Furthermore, the information processing device 10 may implement functions similar to those of the embodiments described above by reading the program described above from a recording medium with a medium reading device and executing the read program described above. Note that the program referred to in another embodiment is not limited to being executed by the information processing device 10. For example, the present invention may be similarly applied to a case where another computer or server executes the program, or a case where such a computer and server cooperatively execute the program.

CITATION LIST

NON-PATENT DOCUMENT

Non-Patent Document 1: Isaac Lage, et al., "Human-in-the-loop interpretability prior", In proceedings of the 32nd International Conference on Neural Information Processing Systems (NIPS'18), pages 10180-10189, 2018

REFERENCE SIGNS LIST

    10 information processing device
    11 communication unit
    12 display unit
    13 storage unit
    14 training data set
    15 determination model
    20 control unit
    21 training unit
    22 interaction processing unit
    23 recommendation unit
    24 retraining unit
    25 screen display unit
    26 output unit

**Claims**

1. A model training program which, when executed by a computer, cause the computer to execute processing comprising:

    selecting training data that a determination model is enabled to correctly determine, from among a plurality of pieces of training data included in a training data set used to train the determination model;
    presenting, to a user, a data item that has contributed to determination from among data items included in the selected training data and a determination result;
    receiving an evaluation of ease of interpretation for the presented data item; and
    performing training of the determination model by using the training data set, based on a loss function adjusted based on an evaluation result.

2. The model training program according to claim 1, for causing the computer to execute processing comprising:

    until the trained determination model satisfies a user requirement, repeatedly performing the presenting, to the user, of the data item that has contributed to the determination and the determination result, the receiving the evaluation of the ease of the interpretation for the data item, adjusting of the loss function, and the training the determination model according to the evaluation result; and
    in a case where the trained determination model satisfies the user requirement, outputting the trained determination model.

3. The model training program according to claim 2, wherein the selecting processing preferentially selects, from among the plurality of pieces of training data included in the training data set, training data in which the determination result made by the determination model matches a label, the number of data items presented to the user as an evaluation target is small, and an absolute value of a predicted value based on the determination result is the largest.

4. The model training program according to claim 2, wherein the presenting processing preferentially presents, to the user, a data item in which a sign of a weight included in the determination model matches a label and a number of times of evaluation presented to the user as an evaluation target is small, from among the data items included in the selected training data.

5. The model training program according to claim 1, wherein, regarding a classification error and a weight penalty included in the loss function, the training processing changes the weight penalty to a smaller value for the data item that is evaluated as easy to interpret, changes the weight penalty to a larger value for the data item that is evaluated as difficult to interpret, and optimizes the changed loss function so as to train the determination model.

6. A model training method implemented by a computer, the model training method comprising:

   selecting training data that a determination model is enabled to correctly determine, from among a plurality of pieces of training data included in a training data set used to train the determination model;
   presenting, to a user, a data item that has contributed to determination from among data items included in the selected training data and a determination result;
   receiving an evaluation of ease of interpretation for the presented data item; and
   performing training of the determination model by using the training data set, based on a loss function adjusted based on an evaluation result.

7. An information processing apparatus comprising:

   a selection unit of selecting training data that a determination model is enabled to correctly determine, from among a plurality of pieces of training data included in a training data set used to train the determination model;
   a presentation unit of presenting, to a user, a data item that has contributed to determination from among data items included in the selected training data and a determination result;
   a reception unit of receiving an evaluation of ease of interpretation for the presented data item; and
   an execution unit of performing training of the determination model by using the training data set, based on a loss function adjusted based on an evaluation result.

# FIG. 1

INFORMATION PROCESSING DEVICE — 10

TRAINED LINEAR MODEL → SEARCH FOR DATA ITEM TO BE RECOMMENDED → RECOMMEND DATA ITEM TO USER → RETRAIN LINEAR MODEL → PRESENT MODEL TO USER

EP 4 160 492 A1

# FIG. 2

| DATA ITEM / DATA | $x_1$ | $x_2$ | $x_3$ | $x_4$ | $x_5$ | $x_6$ | $x_7$ | $x_8$ | LABEL |
|---|---|---|---|---|---|---|---|---|---|
| a | 1 | 0 | 0 | 0 | 0 | 0 | 1 | 1 | POSITIVE EXAMPLE |
| b | 1 | 1 | 1 | 1 | 0 | 0 | 1 | 1 | POSITIVE EXAMPLE |
| c | 0 | 0 | 0 | 0 | 1 | 1 | 1 | 1 | POSITIVE EXAMPLE |
| d | 1 | 1 | 1 | 1 | 0 | 0 | 0 | 0 | NEGATIVE EXAMPLE |
| e | 0 | 1 | 1 | 1 | 1 | 1 | 0 | 0 | NEGATIVE EXAMPLE |
| f | 0 | 1 | 1 | 1 | 1 | 1 | 1 | 1 | NEGATIVE EXAMPLE |
| EASE OF INTERPRETATION | △ | × | × | ○ | × | △ | ○ | × | |

$$m(x) = x_1 - x_2 - x_4 - x_5 + x_7 + x_8$$

TASK TAKES TIME SINCE REGRESSION EQUATION IS LONG

ALTHOUGH REGRESSION EQUATION IS SHORT, MOST OF DATA ITEMS CANNOT BE INTERPRETED

$$m(x) = x_1 - 2x_2 - x_5 + 2x_8$$

# FIG. 3

10

## INFORMATION PROCESSING DEVICE

| 11 | 12 |
|---|---|
| COMMUNICATION UNIT | DISPLAY UNIT |

20

### CONTROL UNIT

21

TRAINING UNIT

22

INTERACTION PROCESSING UNIT

| 23 | 24 |
|---|---|
| RECOMMENDATION UNIT | RETRAINING UNIT |

| 25 | |
|---|---|
| SCREEN DISPLAY UNIT | OUTPUT UNIT |

26

13

## STORAGE UNIT

| 14 | 15 |
|---|---|
| TRAINING DATA SET | DETERMINATION MODEL |

# FIG. 4

| DATA ITEM / DATA | $x_1$ | $x_2$ | $x_3$ | $x_4$ | $x_5$ | $x_6$ | $x_7$ | $x_8$ | LABEL |
|---|---|---|---|---|---|---|---|---|---|
| a | 1 | 0 | 0 | 0 | 0 | 0 | 1 | 1 | POSITIVE EXAMPLE |
| b | 1 | 1 | 1 | 1 | 0 | 0 | 1 | 1 | POSITIVE EXAMPLE |
| c | 0 | 0 | 0 | 0 | 1 | 1 | 1 | 1 | POSITIVE EXAMPLE |
| d | 1 | 1 | 1 | 1 | 0 | 0 | 0 | 0 | NEGATIVE EXAMPLE |
| e | 0 | 1 | 1 | 1 | 1 | 1 | 0 | 0 | NEGATIVE EXAMPLE |
| f | 0 | 1 | 1 | 1 | 1 | 1 | 1 | 1 | NEGATIVE EXAMPLE |

FIG. 5

$$L(y, X, \boldsymbol{a}) = \|y - \boldsymbol{a}X\|_2^2 + \sum_i^d \rho_i a_i$$

$X \equiv \begin{bmatrix} \text{DATA a} \\ \text{DATA b} \\ \text{DATA c} \\ \text{DATA d} \\ \text{DATA e} \\ \text{DATA f} \end{bmatrix} \equiv \begin{bmatrix} x_1 & x_2 & x_3 & x_4 & x_5 & x_6 & x_7 & x_8 \\ x_1 & x_2 & x_3 & x_4 & x_5 & x_6 & x_7 & x_8 \\ x_1 & x_2 & x_3 & x_4 & x_5 & x_6 & x_7 & x_8 \\ x_1 & x_2 & x_3 & x_4 & x_5 & x_6 & x_7 & x_8 \\ x_1 & x_2 & x_3 & x_4 & x_5 & x_6 & x_7 & x_8 \\ x_1 & x_2 & x_3 & x_4 & x_5 & x_6 & x_7 & x_8 \end{bmatrix} \equiv \begin{bmatrix} 1 & 0 & 0 & 0 & 0 & 0 & 1 & 1 \\ 1 & 1 & 1 & 1 & 0 & 0 & 1 & 1 \\ 0 & 0 & 0 & 0 & 1 & 1 & 1 & 1 \\ 1 & 1 & 1 & 1 & 0 & 0 & 0 & 0 \\ 0 & 1 & 1 & 1 & 1 & 1 & 0 & 0 \\ 0 & 1 & 1 & 1 & 1 & 1 & 1 & 1 \end{bmatrix}$

$y \equiv \begin{bmatrix} \text{DATA a} \\ \text{DATA b} \\ \text{DATA c} \\ \text{DATA d} \\ \text{DATA e} \\ \text{DATA f} \end{bmatrix} \equiv \begin{bmatrix} \text{LABEL} \\ \text{LABEL} \\ \text{LABEL} \\ \text{LABEL} \\ \text{LABEL} \\ \text{LABEL} \end{bmatrix} \equiv \begin{bmatrix} \text{POSITIVE EXAMPLE} \\ \text{POSITIVE EXAMPLE} \\ \text{POSITIVE EXAMPLE} \\ \text{NEGATIVE EXAMPLE} \\ \text{NEGATIVE EXAMPLE} \\ \text{NEGATIVE EXAMPLE} \end{bmatrix} \equiv \begin{bmatrix} 1 \\ 1 \\ 1 \\ 0 \\ 0 \\ 0 \end{bmatrix}$

EP 4 160 492 A1

# FIG. 6

| DATA \ DATA ITEM | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0 |
| b | 1 | 1 | 1 | 1 | 0 | 0 | 1 | 1 | POSITIVE EXAMPLE | 1 | 0 |
| c | 0 | 0 | 0 | 0 | 1 | 1 | 1 | 1 | POSITIVE EXAMPLE | 1 | 0 |
| d | 1 | 1 | 1 | 1 | 0 | 0 | 0 | 0 | NEGATIVE EXAMPLE | -1 | 0 |
| e | 0 | 1 | 1 | 1 | 1 | 1 | 0 | 0 | NEGATIVE EXAMPLE | -3 | 0 |
| f | 0 | 1 | 1 | 1 | 1 | 1 | 1 | 1 | NEGATIVE EXAMPLE | -1 | 0 |
| PENALTY | 1.0 | 1.0 | 1.0 | 1.0 | 1.0 | 1.0 | 1.0 | 1.0 | | | |
| NUMBER OF TIMES OF EVALUATION | 0 | 0 | 0 | 0 | 0 | 0 | 0 | 0 | | | |

$$\text{LOSS FUNCTION } L(y, X, a) = \|y - aX\|_2^2 + \sum_i^d \rho_i a_i$$

EP 4 160 492 A1

# FIG. 7

| DATA ITEM / DATA | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0 |
| b | 1 | 1 | 1 | 1 | 0 | 0 | 1 | 1 | POSITIVE EXAMPLE | 1 | 0 |
| c | 0 | 0 | 0 | 0 | 1 | 1 | 1 | 1 | POSITIVE EXAMPLE | 1 | 0 |
| d | 1 | 1 | 1 | 1 | 0 | 0 | 0 | 0 | NEGATIVE EXAMPLE | -1 | 0 |
| e | 0 | 1 | 1 | 1 | 1 | 1 | 0 | 0 | NEGATIVE EXAMPLE | -3 | 0 |
| f | 0 | 1 | 1 | 1 | 1 | 1 | 1 | 1 | NEGATIVE EXAMPLE | -1 | 0 |
| LATENT EVALUATION | △ | × | × | ○ | × | △ | ○ | × | | | |
| PENALTY | 1.0 | 1.0 | 1.0 | 1.0 | 1.0 | 1.0 | 1.0 | 1.0 | | | |
| NUMBER OF TIMES OF EVALUATION | 0 | 0 | 0 | 0 | 0 | 0 | 0 | 0 | | | |

⬇ INPUT

LOSS FUNCTION $\quad L(y, X, a) = \|y - aX\|_2^2 + \sum_i^d \rho_i a_i$

⬇

$$m(x) = x_1 - 2x_2 - x_5 + 2x_8$$

# FIG. 8

EP 4 160 492 A1

**INTERACTIVE MODEL CREATION SYSTEM** ⌐50

**CURRENT MODEL** ⌐51

$$x_1 - 2x_2 - x_5 + 2x_8$$

| OUTPUT MODEL |
|---|

**EVALUATION OF DATA ITEM** ⌐52

[ITEM 1]  ☐ EASY TO INTERPRET  ☐ DIFFICULT TO INTERPRET  ☑ NEITHER OF TWO

[ITEM 8]  ☐ EASY TO INTERPRET  ☑ DIFFICULT TO INTERPRET  ☐ NEITHER OF TWO

| TRANSMIT EVALUATION RESULT |
|---|

**DETAILED DATA** ⌐53

| | $x_1$ | $x_2$ | $x_3$ | $x_4$ | $x_5$ | $x_6$ | $x_7$ | $x_8$ | LABEL | PREDICTED VALUE |
|---|---|---|---|---|---|---|---|---|---|---|
| a | 1 | 0 | 0 | 0 | 0 | 0 | 1 | 1 | POSITIVE EXAMPLE | 3 |
| b | 1 | 1 | 1 | 1 | 0 | 0 | 1 | 1 | POSITIVE EXAMPLE | 1 |
| c | 0 | 0 | 0 | 0 | 1 | 1 | 1 | 1 | POSITIVE EXAMPLE | 1 |
| ... | ... | ... | ... | ... | ... | ... | ... | ... | ... | ... |

# FIG. 9

| DATA ITEM \ DATA | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0 |
| b | 1 | 1 | 1 | 1 | 0 | 0 | 1 | 1 | POSITIVE EXAMPLE | 1 | 0 |
| c | 0 | 0 | 0 | 0 | 1 | 1 | 1 | 1 | POSITIVE EXAMPLE | 1 | 0 |
| d | 1 | 1 | 1 | 1 | 0 | 0 | 0 | 0 | NEGATIVE EXAMPLE | -1 | 0 |
| e | 0 | 1 | 1 | 1 | 1 | 1 | 0 | 0 | NEGATIVE EXAMPLE | -3 | 0 |
| f | 0 | 1 | 1 | 1 | 1 | 1 | 1 | 1 | NEGATIVE EXAMPLE | -1 | 0 |
| LATENT EVALUATION | △ | × | × | ○ | × | △ | ○ | × | | | |
| PENALTY | 1.0 | 1.0 | 1.0 | 1.0 | 1.0 | 1.0 | 1.0 | 2.0 | | | |
| NUMBER OF TIMES OF EVALUATION | 1 | 0 | 0 | 0 | 0 | 0 | 0 | 1 | | | |

⇩ INPUT

LOSS FUNCTION $L(y, X, a) = \|y - aX\|_2^2 + \sum_i^d \rho_i a_i$

⇩ RELEARN

$$m(x) = x_1 - 2x_2 - x_5 + 2x_7$$

EP 4 160 492 A1

## FIG. 10

| DATA ITEM / DATA | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0.5 |
| b | 1 | 1 | 1 | 1 | 0 | 0 | 1 | 1 | POSITIVE EXAMPLE | 1 | 0.33 |
| c | 0 | 0 | 0 | 0 | 1 | 1 | 1 | 1 | POSITIVE EXAMPLE | 1 | 0 |
| d | 1 | 1 | 1 | 1 | 0 | 0 | 0 | 0 | NEGATIVE EXAMPLE | -1 | 0.5 |
| e | 0 | 1 | 1 | 1 | 1 | 1 | 0 | 0 | NEGATIVE EXAMPLE | -3 | 0 |
| f | 0 | 1 | 1 | 1 | 1 | 1 | 1 | 1 | NEGATIVE EXAMPLE | -1 | 0 |
| LATENT EVALUATION | △ | × | × | ○ | × | △ | ○ | × | | | |
| PENALTY | 1.0 | 1.0 | 1.0 | 1.0 | 1.0 | 1.0 | 1.0 | 2.0 | | | |
| NUMBER OF TIMES OF EVALUATION | 1 | 0 | 0 | 0 | 0 | 0 | 0 | 1 | | | |

⇩ RECOMMEND

$$m(x) = x_1 - 2x_2 - x_5 + 2x_7$$

e IS CLASSIFIED AS NEGATIVE EXAMPLE DUE TO $x_2$ AND $x_5$

| | $x_2$ | $x_5$ |
|---|---|---|
| EVALUATION | DIFFICULT TO INTERPRET | DIFFICULT TO INTERPRET |

EP 4 160 492 A1

# FIG. 11

| DATA \ DATA ITEM | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0.5 |
| b | 1 | 1 | 1 | 1 | 0 | 0 | 1 | 1 | POSITIVE EXAMPLE | 1 | 0.33 |
| c | 0 | 0 | 0 | 0 | 1 | 1 | 1 | 1 | POSITIVE EXAMPLE | 1 | 0 |
| d | 1 | 1 | 1 | 1 | 0 | 0 | 0 | 0 | NEGATIVE EXAMPLE | -1 | 0.5 |
| e | 0 | 1 | 1 | 1 | 1 | 1 | 0 | 0 | NEGATIVE EXAMPLE | -3 | 0 |
| f | 0 | 1 | 1 | 1 | 1 | 1 | 1 | 1 | NEGATIVE EXAMPLE | -1 | 0 |
| LATENT EVALUATION | △ | × | × | ○ | × | △ | ○ | × | | | |
| PENALTY | 1.0 | 2.0 | 1.0 | 1.0 | 2.0 | 1.0 | 1.0 | 2.0 | | | |
| NUMBER OF TIMES OF EVALUATION | 1 | 0 | 0 | 0 | 0 | 0 | 0 | 1 | | | |

⬇ INPUT

LOSS FUNCTION $L(y, X, a) = \|y - aX\|_2^2 + \sum_i^d \rho_i a_i$

⬇ RELEARN

$$m(x) = x_1 - 2x_3 - x_6 + 2x_7$$

EP 4 160 492 A1

# FIG. 12

| DATA ITEM / DATA | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0.5 |
| b | 1 | 1 | 1 | 1 | 0 | 0 | 1 | 1 | POSITIVE EXAMPLE | 1 | 0.33 |
| c | 0 | 0 | 0 | 0 | 1 | 1 | 1 | 1 | POSITIVE EXAMPLE | 1 | 0 |
| d | 1 | 1 | 1 | 1 | 0 | 0 | 0 | 0 | NEGATIVE EXAMPLE | -1 | 0.5 |
| e | 0 | 1 | 1 | 1 | 1 | 1 | 0 | 0 | NEGATIVE EXAMPLE | -3 | 0 |
| f | 0 | 1 | 1 | 1 | 1 | 1 | 1 | 1 | NEGATIVE EXAMPLE | -1 | 0 |
| LATENT EVALUATION | △ | × | × | ○ | × | △ | ○ | × | | | |
| PENALTY | 1.0 | 2.0 | 1.0 | 1.0 | 2.0 | 1.0 | 1.0 | 2.0 | | | |
| NUMBER OF TIMES OF EVALUATION | 1 | 1 | 0 | 0 | 1 | 0 | 0 | 1 | | | |

$$m(x) = x_1 - 2x_3 - x_6 + 2x_7$$

⬇ RECOMMEND

e IS CLASSIFIED AS NEGATIVE EXAMPLE DUE TO $x_3$ AND $x_6$

| | $x_3$ | $x_6$ |
|---|---|---|
| EVALUATION | DIFFICULT TO INTERPRET | NEITHER OF TWO |

EP 4 160 492 A1

# FIG. 13

| DATA ITEM \ DATA | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0.5 |
| b | 1 | 1 | 1 | 1 | 0 | 0 | 1 | 1 | POSITIVE EXAMPLE | 1 | 0.33 |
| c | 0 | 0 | 0 | 0 | 1 | 1 | 1 | 1 | POSITIVE EXAMPLE | 1 | 0 |
| d | 1 | 1 | 1 | 1 | 0 | 0 | 0 | 0 | NEGATIVE EXAMPLE | -1 | 0.5 |
| e | 0 | 1 | 1 | 1 | 1 | 1 | 0 | 0 | NEGATIVE EXAMPLE | -3 | 0 |
| f | 0 | 1 | 1 | 1 | 1 | 1 | 1 | 1 | NEGATIVE EXAMPLE | -1 | 0 |
| LATENT EVALUATION | △ | × | × | ○ | × | △ | ○ | × | | | |
| PENALTY | 1.0 | 2.0 | 2.0 | 1.0 | 2.0 | 1.0 | 1.0 | 2.0 | | | |
| NUMBER OF TIMES OF EVALUATION | 1 | 1 | 1 | 0 | 1 | 1 | 0 | 1 | | | |

⬇ INPUT

LOSS FUNCTION $L(y, X, a) = \|y - aX\|_2^2 + \sum_i^d \rho_i a_i$

⬇ RELEARN

$m(x) = x_1 - 2x_4 - x_6 + 2x_7$

EP 4 160 492 A1

# FIG. 14

| DATA ITEM / DATA | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0.5 |
| b | 1 | 1 | 1 | 1 | 0 | 0 | 1 | 1 | POSITIVE EXAMPLE | 1 | 0.33 |
| c | 0 | 0 | 0 | 0 | 1 | 1 | 1 | 1 | POSITIVE EXAMPLE | 1 | 0.5 |
| d | 1 | 1 | 1 | 1 | 0 | 0 | 0 | 0 | NEGATIVE EXAMPLE | -1 | 0.5 |
| e | 0 | 1 | 1 | 1 | 1 | 1 | 0 | 0 | NEGATIVE EXAMPLE | -3 | 0.5 |
| f | 0 | 1 | 1 | 1 | 1 | 1 | 1 | 1 | NEGATIVE EXAMPLE | -1 | 0.33 |
| LATENT EVALUATION | △ | × | × | ○ | × | △ | ○ | × | | | |
| PENALTY | 1.0 | 2.0 | 2.0 | 1.0 | 2.0 | 1.0 | 1.0 | 2.0 | | | |
| NUMBER OF TIMES OF EVALUATION | 1 | 1 | 1 | 0 | 1 | 1 | 0 | 1 | | | |

$$m(x) = x_1 - 2x_4 - x_6 + 2x_7$$

RECOMMEND

b IS CLASSIFIED AS NEGATIVE EXAMPLE DUE TO $x_1$ AND $x_7$

| | $x_1$ | $x_7$ |
|---|---|---|
| EVALUATION | NEITHER OF TWO | EASY TO INTERPRET |

EP 4 160 492 A1

# FIG. 15

| DATA ITEM / DATA | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 3 | 0.5 |
| b | 1 | 1 | 1 | 1 | 0 | 0 | 1 | 1 | POSITIVE EXAMPLE | 1 | 0.33 |
| c | 0 | 0 | 0 | 0 | 1 | 1 | 1 | 1 | POSITIVE EXAMPLE | 1 | 0.5 |
| d | 1 | 1 | 1 | 1 | 0 | 0 | 0 | 0 | NEGATIVE EXAMPLE | -1 | 0.5 |
| e | 0 | 1 | 1 | 1 | 1 | 1 | 0 | 0 | NEGATIVE EXAMPLE | -3 | 0.5 |
| f | 0 | 1 | 1 | 1 | 1 | 1 | 1 | 1 | NEGATIVE EXAMPLE | -1 | 0.33 |
| LATENT EVALUATION | △ | × | × | ○ | × | △ | ○ | × | | | |
| PENALTY | 1.0 | 2.0 | 2.0 | 1.0 | 2.0 | 1.0 | 0.5 | 2.0 | | | |
| NUMBER OF TIMES OF EVALUATION | 2 | 1 | 1 | 0 | 1 | 1 | 1 | 1 | | | |

⬇ INPUT

LOSS FUNCTION  $L(y, X, a) = \|y - aX\|_2^2 + \sum_i^d \rho_i a_i$

⬇ RELEARN

$$m(x) = x_1 - 2.5x_4 - x_6 + 3x_7$$

EP 4 160 492 A1

## FIG. 16

| DATA ITEM / DATA | $x_1$ | $x_2$ | $x_3$ | $x_4$ | $x_5$ | $x_6$ | $x_7$ | $x_8$ | LABEL | PREDICTED VALUE | AVERAGE NUMBER OF TIMES OF EVALUATION |
|---|---|---|---|---|---|---|---|---|---|---|---|
| a | 1 | 0 | 0 | 0 | 0 | 0 | 1 | 1 | POSITIVE EXAMPLE | 4 | 0.5 |
| b | 1 | 1 | 1 | 1 | 0 | 0 | 1 | 1 | POSITIVE EXAMPLE | 1.5 | 0.33 |
| c | 0 | 0 | 0 | 0 | 1 | 1 | 1 | 1 | POSITIVE EXAMPLE | 2 | 0.5 |
| d | 1 | 1 | 1 | 1 | 0 | 0 | 0 | 0 | NEGATIVE EXAMPLE | -1.5 | 0.5 |
| e | 0 | 1 | 1 | 1 | 1 | 1 | 0 | 0 | NEGATIVE EXAMPLE | -3.5 | 0.5 |
| f | 0 | 1 | 1 | 1 | 1 | 1 | 1 | 1 | NEGATIVE EXAMPLE | -0.5 | 0.33 |
| LATENT EVALUATION | △ | × | × | ○ | × | △ | ○ | × | | | |
| PENALTY | 1.0 | 2.0 | 2.0 | 1.0 | 2.0 | 1.0 | 0.5 | 2.0 | | | |
| NUMBER OF TIMES OF EVALUATION | 2 | 1 | 1 | 0 | 1 | 1 | 1 | 1 | | | |

$$m(x) = x_1 - 2.5x_4 - x_6 + 3x_7$$

EP 4 160 492 A1

# FIG. 17

START

TRAIN MODEL ~S101

SET INITIAL VALUE ~S102

SELECT DATA ITEM TO BE
RECOMMENDED AND PRESENT ~S103
DATA ITEM TO USER

ACQUIRE USER EVALUATION ~S104

RETRAIN MODEL ~S105

S106
DOES MODEL SATISFY
CONDITION? — NO

YES S107

OUTPUT MODEL

END

S108
PRESENT DATA ITEM AND
ACQUIRE USER EVALUATION

# FIG. 18

INFORMATION PROCESSING DEVICE 10

MEMORY 10c

PROCESSOR 10d

COMMUNICATION DEVICE 10a

HDD 10b

## INTERNATIONAL SEARCH REPORT

International application No.

PCT/JP2020/020814

**A. CLASSIFICATION OF SUBJECT MATTER**
Int. Cl. G06N20/00(2019.01)i
FI: G06N20/00 130

According to International Patent Classification (IPC) or to both national classification and IPC

**B. FIELDS SEARCHED**

Minimum documentation searched (classification system followed by classification symbols)
Int. Cl. G06N20/00

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | 鈴木浩史ほか．ユーザーの納得感を考慮した線形モデルの重み付き Lasso による定式化と一解法．第 112 回人工知能基本問題研究会資料．01 March 2020, pp. 67-72, in particular, "2. Formulation of Problem", "3. Proposed Algorithm", (SUZUKI, Hirofumi et al. Heuristic Algorithm for Human Acceptable Linear Model based on Weighted Lasso. SIG-FPAI-112.) | 1-7 |
| A | JP 2012-73761 A (DAINIPPON SCREEN MANUFACTURING CO., LTD.) 12 April 2012 | 1-7 |
| A | JP 2020-17112 A (SKYDISC INC.) 30 January 2020 | 1-7 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25.08.2020 | 08.09.2020 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**
Information on patent family members

| International application No. |
|---|
| PCT/JP2020/020814 |

| Patent Documents referred to in the Report | Publication Date | Patent Family | Publication Date |
|---|---|---|---|
| JP 2012-73761 A | 12.04.2012 | (Family: none) | |
| JP 2020-17112 A | 30.01.2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ISAAC LAGE et al.** Human-in-the-loop interpretability prior. *proceedings of the 32nd International Conference on Neural Information Processing Systems (NIPS'18),* 2018, 10180-10189